# EUROPÄISCHE PATENTSCHRIFT

(11) **EP 2 670 667 B1**
(45) Veröffentlichungstag und Bekanntmachung des Hinweises auf die Patenterteilung: **13.12.2017**
(21) Anmeldenummer: 12700607.0
(22) Anmeldetag: 17.01.2012
(51) Int. Cl.: B65B 3/02, B29C 49/46, B29C 49/12, B67C 3/06

(54) **VERFAHREN SOWIE VORRICHTUNG ZUM HERSTELLEN VON MIT EINEM FLÜSSIGEN FÜLLGUT GEFÜLLTEN BEHÄLTERN**
METHOD AND DEVICE FOR PRODUCING CONTAINERS FILLED WITH A LIQUID PRODUCT
PROCÉDÉ ET DISPOSITIF DE FABRICATION DE RÉCIPIENTS REMPLIS AVEC UN PRODUIT LIQUIDE

(30) Priorität: 31.01.2011 DE 102011009888; 28.02.2011 DE 102011012664; 31.01.2011 DE 102011009889; 11.02.2011 DE 102011011076; 28.02.2011 DE 102011012665
(43) Veröffentlichungstag der Anmeldung: 11.12.2013
(73) Patentinhaber: KHS GmbH, 44143 Dortmund (DE); KHS Corpoplast GmbH, 22145 Hamburg (DE)
(72) Erfinder: HAESENDONCKX, Frank, 22047 Hamburg (DE); KLATT, Dieter, 22147 Hamburg (DE); EHMER, Wilfried, 44227 Dortmund (DE)
(74) Vertreter: Meissner Bolte Partnerschaft mbB
(86) Internationale Anmeldenummer: PCT/EP2012/000164
(87) Internationale Veröffentlichungsnummer: WO 2012/104019

(56) Entgegenhaltungen:
- EP-A1- 0 375 912
- WO-A1-2010/003853
- WO-A1-2011/076167
- DE-A1- 2 209 494
- JP-A- 2000 043 129

## Beschreibung

Die Erfindung betrifft ein Verfahren gemäß Oberbegriff Patentanspruch 1 sowie eine Vorrichtung gemäß Oberbegriff Patentanspruch 14.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE-OS 43 40 291). Typischerweise weist eine Blasmaschine eine Heizeinrichtung zum Temperieren oder Vorerhitzen (thermisches Konditionieren) der Vorformlinge sowie eine Blaseinrichtung mit wenigstens einer Blasstation auf, in deren Bereich der jeweils zuvor temperierte Vorformling biaxial oder multiaxial zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation ist in der DE-OS 42 12 583 beschrieben. Möglichkeiten der Temperierung der Vorformlinge sind in der DE-OS 23 52 926 erläutert.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockte Blas-Füll-Einrichtung zusammen zu fassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen aus thermisch konditionierten bzw. vorerhitzten Vorformlingen herzustellen und dabei gleichzeitig mit einem flüssigen Füllgut zu füllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter verformt wird. Derartige Verfahren, bei denen ein gleichzeitige Formen und Füllen des jeweiligen Behälters erfolgt, können auch als hydraulische Ausformverfahren oder hydraulischen Behälterformung bezeichnet werden.

Bei einem Formen der Behälter aus den Vorformlingen durch das Füllgut selbst, d.h. unter Verwendung des Füllgutes als hydraulisches Druckmedium wird für das Formen und Füllen der Behälter nur noch eine Maschine benötigt, die dafür allerdings eine erhöhte Komplexität aufweist. Erste Versuchsergebnisse mit derartigen Einrichtungen zeigen allerdings, dass die Qualität der hergestellten Behälter noch deutlich unterhalb der Qualität von konventionell hergestellten blasgeformten Behältern liegt. Ursache hierfür ist u.a., dass eine Vielzahl von Prozessparametern, die bei der Durchführung des üblichen Blasformens verfügbar sind, bei der hydraulischen Behälterformung entweder nicht vorliegen oder noch nicht erschlossen werden konnten.

Eine Problematik besteht bei hydraulischen Behälterformung auch darin, dass eine Verschmutzung der jeweiligen Form- und Füllstation bzw. der diese Station bildenden Form, die ähnlich einer Blasform einer Blasformmaschine zum Herstellen von Behältern aus thermisch konditionierten Vorformlingen durch Blasen mit einem Druckgas ausgeführt ist, vermieden werden muss. Speziell im Falle einer Voll- oder Teilkarbonisierung des Füllgutes besteht im besonderem Maße die Gefahr einer Verschmutzung der jeweiligen Form- und Füllstation durch Füllgutverluste, insbesondere bei der Absenkung des Innendrucks des Behälters, d.h. bei der Entlastung des Behälters von dem recht hohen Form- und Fülldruck auf den Umgebungsdruck. Derartige Füllgutverluste sind insbesondere durch eine massive Schaumbildung beim Entlasten bedingt, sodass das gleichzeitige Formen und Füllen von Behältern unter Verwendung von Vorformlingen und unter Verwendung des Füllgutes als Druckmedium (hydraulische Ausformtechnik), insbesondere für C02-haltige Produkte bisher nicht zum Einsatz kommen konnte.

Die WO 2010/003853 A1 beschreibt ein Verfahren und eine Vorrichtung zum Abfüllen von flüssigen Lebensmitteln. Dabei kann eine erste Komponente durch eine Reckstange zugeführt werden. Dazu weist die Reckstange auf einem Höhenniveau Austrittsöffnungen auf. Die zweite Komponente wird durch eine Öffnung um die Reckstange herum zugeführt.

Aufgabe der Erfindung ist es, ein Verfahren aufzuzeigen, welches es ermöglicht, ein hydraulisches Ausformverfahren bzw. eine hydraulische speziell auch bei hohen Durchsatzraten (Anzahl der geformten und gefüllten Behälter je Zeiteinheit) und/oder bei einem hohen C02-Gehalt des in den jeweiligen Behälter einzubringenden Füllgutes in optimaler Weise zu gestalten, insbesondere auch die Gefahr eines Verschmutzens der jeweiligen Form- und Füllstation durch das Füllgut, beispielsweise durch ein C02-haltiges Füllgut wirksam zu vermeiden.

Zur Lösung dieser Aufgabe ist ein Verfahren zur Herstellung von mit einem flüssigen Füllgut gefüllten Behältern entsprechend dem Patentanspruch 1 ausgebildet. Eine Vorrichtung zur Herstellung von mit einem flüssigen Füllgut gefüllten Behältern ist Gegenstand des Patentanspruchs 14.

Bei der Erfindung werden das Füllgut oder die Anteile bzw. Komponenten des Füllgutes in wenigstens einer Prozessphase zeitgleich oder zeitlich überlappend oder in zumindest zwei Prozessphasen oder Teilphasen zeitversetzt dem Vorformling und/oder dem sich formenden Behälter und/oder dem ausgeformten Behälter zugeführt, und zwar auf wenigstens zwei unterschiedlichen Höhenniveaus, beispielsweise mit unterschiedlichen Gehalten an Kohlendioxid und/oder mit unterschiedlichen Temperaturen und/oder mit unterschiedlichem Druck, beispielsweise mit einem ersten, beispielsweise höheren Druck, z.B. mit einem Druck im Bereich zwischen 8bar und 15bar, auf einem oberen Höhenniveau oder auf diesem oberen Höhenniveau zeitgleich oder zeitlich überlappend auch auf wenigstens einem tieferen Höhenniveau und mit einem zweiten, beispielsweise niedrigeren Druck, z.B. mit einem Druck kleiner 6bar, auf dem wenigstens einen tieferen Höhenniveau.

Um eine möglichst hohe Produktqualität sicherzustellen, erfolgt eine Führung des jeweiligen Vorformlings bei seiner Umformung in eine sich entwickelnde Behälterblase und anschließend in den die endgültigen Kontur oder Formgebung aufweisenden Behälter, so dass ein typischerweise im Bereich einer Vorformlingskuppe angeordnetes Zentrum definiert und reproduzierbar positioniert wird. Eine derartige definierte Positionierung ist wichtig, da bei der Umformung bzw. Aufweitung des Vorformlings in den Behälter eine biaxiale Orientierung des Materials des Vorformlings durchgeführt wird und hierfür eine gezielte und vorgebbare Materialverteilung innerhalb der Wandung des geformten Behälters erforderlich ist. Bei einer unkontrollierten Behälterformung sind hingegen unerwünschte und insbesondere ungleichmäßige Materialverteilungen zu erwarten.

Eine besonders wirkungsvolle Führung während der Form- und Füllphase ist durch die Verwendung eines Reckstabes oder einer Reckstange möglich, wobei das Füllgut erfindungsgemäß mindestens teilweise durch die Reckstange hindurch zugeführt wird. Ergänzend kann das Füllgut auch mindestens teilweise an der Reckstange vorbei zugeführt wird.

Erfindungsgemäß ist weiterhin vorgesehen, dass das Füllgut oder mindestens ein Teilvolumen des Füllgutes auf wenigstens zwei unterschiedlichen Höhenniveaus in den Vorformling oder in den sich aus diesem bildenden Behälter oder in den ausgeformten Behälter eingeleitet wird, indem das Füllgut über wenigstens zwei auf den unterschiedlichen Höhenniveaus angeordnete Auslassöffnungen der Reckstange ausgebracht wird, wobei in der Reckstange wenigstens zwei Kanäle vorgesehen sind, von denen ein erster Kanal an wenigstens einer Auslassöffnung auf dem niedrigen Höhenniveau mündet und ein zweiter Kanal an wenigstens einer Auslassöffnung auf dem höheren Höhenniveau mündet.

Eine gleichmäßige hydraulische Behälterformung wird dadurch erreicht, dass das Füllgut mindestens zeitweilig mit einem konstanten Volumenstrom zugeführt wird. Möglichkeiten zur Beeinflussung der Materialverteilung innerhalb der Wandung des entstehenden oder ausgeformten Behälters werden dadurch erschlossen, dass das Füllgut mindestens zeitweilig mit einem variablen Volumenstrom zugeführt wird.

Eine äußerst kompakte Konstruktion wird dadurch unterstützt, dass die Behälter auf einem rotierenden Prozessrad oder Rotor geformt, gefüllt und verschlossen werden.

Eine weitere Ausführungsvariante besteht darin, dass eine generierte Reckkraft gemessen wird. Lediglich geringe von der Reckstange aufzubringende Reckkräfte können dadurch gewährleistet werden, dass ein Volumenstrom des Füllgutes in Abhängigkeit von einer gemessenen Reckkraft gesteuert wird.

Unabhängig von den vorgenannten Merkmalen oder zusätzlich zu diesen Merkmalen ist das erfindungsgemäße Verfahren in Weiterbildung der Erfindung vorzugsweise so ausgebildet, dass zum Einbringen des Füllgutes auf wenigstens zwei unterschiedlichen Höhenniveaus wenigstes eine Komponente des Füllgutes an der Reckstange vorbei und wenigstens eine weitere Komponente durch die Reckstange hindurch zugeführt werden, und/oder
dass das Füllgut aus wenigstens zwei Anteilen oder Komponenten mit unterschiedlicher Konzentration an Kohlendioxid besteht,
und/oder
dass auf den mindestens zwei unterschiedlichen Höhenniveaus das Füllgut oder Anteile oder Komponenten hiervon mit unterschiedlicher Konzentration an Kohlendioxid zugeführt werden, vorzugsweise der Anteil des Füllgutes, welcher im Vergleich zu wenigstens einem weiteren Anteil des Füllgutes eine höhere Konzentration an Kohlendioxid enthält, auf dem tieferen Höhenniveau,
und/oder
dass das Füllgut oder Anteile oder Komponenten hiervon mit der höheren Konzentration an Kohlendioxid gekühlt oder gekühlt zugeführt wird, vorzugsweise mit einer Temperatur kleiner als die Temperatur desjenigen Anteils an Füllgut, welches kein Kohlendioxid oder eine geringere Konzentration an Kohlendioxid aufweist,
und/oder
dass der Anteil des Füllgutes mit der höheren Konzentration an Kohlendioxid durch die Reckstange hindurch zugeführt wird,
und/oder
dass das Einleiten des Füllgutes auf den wenigstens zwei unterschiedlichen Höhenniveaus zeitversetzt oder zeitgleich oder zeitlich überlappend erfolgt,
und/oder
dass das Einleiten des Füllgut oder der Anteile des Füllgutes auf den wenigstens zwei Höhenniveaus mit unterschiedlichen Drücken erfolgt,
und/oder
dass die Reckstange zumindest bereichsweise gegenüber dem Füllgut thermisch isoliert wird, und zwar vorzugsweise in einem Bereich, in welchem das Füllgut oder der Anteile des Füllgutes zugeführt wird, das oder der die höhere Konzentration an Kohlendioxid und/oder die niedrigere Füllguttemperatur aufweist,
und/oder
dass zumindest ein Teilstrom des Füllgutes turbulenzarm in den Innenraum des Vorformlings oder des sich formenden Behälters eingeleitet wird,
und/oder
dass das Füllgut oder der Anteil des Füllgutes mit der höheren Konzentration an Kohlendioxid erst dann auf dem tieferen Höhenniveau eingeleitet wird, wenn das in den Vorformling oder in den sich bildenden Behälter bereits eingebrachte Füllgut einen Füllguteinlass, der zum Einbringen des Füllgutes mit der höheren Konzentration an Kohlendioxid bestimmt ist, zumindest vollständig oder im Wesentlichen vollständig überdeckt,
dass der Kohlendioxidgehalt bzw. C02-Gehalt des Füllgutes oder des Anteils bzw. der Komponente des Füllgutes mit der höheren C02-Konzentration 30 Gew.-%, vorzugsweise 50 bis 100 Gew.-% über dem C02-Gehalt des Füllgutes oder des Anteils bzw. der Komponente des Füllgutes ohne C02- Gehalt oder mit reduziertem C02-Gehalt liegt,
und/oder
dass die Temperatur des Füllgutes oder des Anteils bzw. der Komponente des Füllgutes mit der höheren C02-Konzentration weniger als 10 °C beträgt, insbesondere zwischen 4°C und 8°C liegt,
und/oder
dass der Druck des Füllgutes oder des Anteils bzw. der Komponente des Füllgutes mit der höheren C02-Konzentration mindestens zeitweise während des Ausformungsprozesses höher ist, als mindestens ein anderer Anteil des Füllgutes, und zwar insbesondere um mindestens 1 bar höher ist,
und/oder
dass auf dem Strömungsweg des innerhalb der Reckstange fließenden Füllgutes oder des Anteils des Füllgutes, eine Drosselelement oder Querschnittsverengung vorgesehen ist, wobei das Drosselelement insbesondere kurz vor wenigstens einem an der Reckstange gebildeten Auslass angeordnet ist,
wobei die vorgenannten Merkmale jeweils einzeln oder in beliebiger Kombination vorgesehen sein können.

Die erfindungsgemäße Vorrichtung ist in Weiterbildung der Erfindung vorzugsweise so ausgebildet,
dass eine Kühleinrichtung entlang einer Leitung oder entlang eines Leitungsabschnitts für dasjenige Füllgut vorgesehen ist, in welchem stromabwärts, d.h. nach dem Kühlen und Durchströmen der Leitung oder des Leitungsabschnittes Kohlendioxid gelöst wird oder welches der Leitung oder dem Leitungsabschnitt von einer Karbonisierungseinheit zuströmt,
und/oder
dass der wenigstens eine zweite Füllgutauslass an dem füllrohrartig wirkenden Element vorgesehen und/oder von wenigstens einer Auslassöffnung gebildet ist, die mit abgerundeten Kanten, vorzugsweise an beiden Seiten mit abgerundeten Kanten ausgebildet und/oder trichter- oder kelchförmig ausgeformt ist,
und/oder
dass die Achse der Hauptströmungsrichtung des wenigstens einen zweiten Füllgutauslasses oder der diesen Auslass bildenden Öffnung gegenüber einer senkrecht zur Ebene der Anlage orientierten Achse in einem Winkel kleiner 80°, vorzugsweise in einem Winkel von 60 - 75° geneigt ist, der (Winkel) sich zu der einer Anlage für ein offenes Ende des jeweiligen Vorformlings abgewandten Seite hin öffnet,
und/oder
dass mindestens ein Leitungsabschnitt, in dem das Füllgut oder der Anteil des Füllgutes mit dem hohen C02-Gehalt geführt wird, isolierend ausgekleidet ist, beispielsweise mit Teflon oder aus einem teflonhaltigem Material,
wobei die vorgenannten Merkmale jeweils einzeln oder in beliebiger Kombination vorgesehen sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Der Ausdruck "im Wesentlichen" oder "etwa" bedeutet im Sinne der Erfindung Abweichungen von jeweils exakten Werten um +/- 10%, bevorzugt um +/- 5% und/oder Abweichungen in Form von für die Funktion unbedeutenden Änderungen.

Die Erfindung wird im Folgenden anhand der Figuren an Ausführungsbeispielen näher erläutert. Es zeigen:
- Figur 1: eine schematische Darstellung eines Grundaufbaus einer Einrichtung oder Form- und Füllmaschine zur Durchführung der hydraulischen Behälterformung unter Verwendung eines Füllgutes,
- Figur 2: einen schematischen Längsschnitt durch einen Vorformling mit teilweise eingeführter Reckstange sowie einer Entlüftungseinrichtung,
- Figur 3: einen schematischen Längsschnitt durch einen geformten Behälter mit teilweise eingeführter Reck- und Fülleinrichtung,

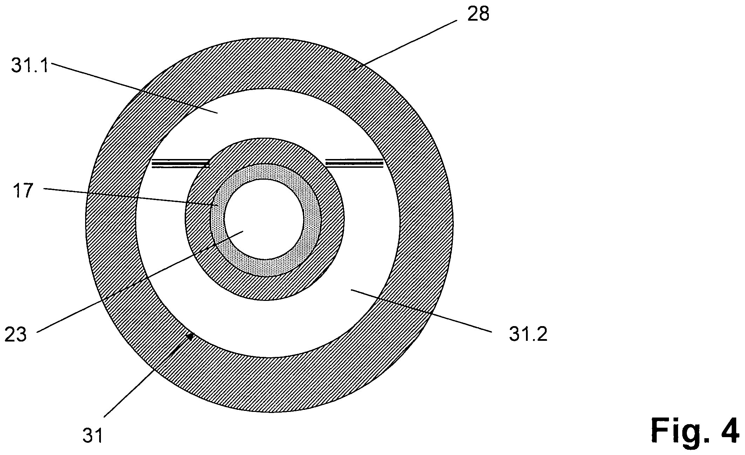

- Figur 4: in vereinfachter Darstellung einen Vertikalschnitt durch ein Anschlusselement der Form- und Fülleinrichtung der Figuren 2 und 3,
- Figur 5: einen Längsschnitt durch eine Form- und Fülleinrichtung oder -station bei einer abgewandelten Ausführungsform,
- Figur 6: einen Längsschnitt durch eine Form- und Fülleinrichtung oder -station mit einer Abdichtung zur Verhinderung eines Nachtropfens,
- Figur 7: eine Ausführungsform mit steuerbarer Zuführung des Füllgutes und separater steuerbarer Entlüftung,
- Figur 8: eine schematische Darstellung einer kombinierten Form-, Füll- und Verschließeinrichtung oder -station und
- Figur 9: eine andere Ausführungsform der kombinierten Form-, Füll- und Verschließeinrichtung oder -station gemäß Figur 8,
- Figuren 10 - 12: jeweils in schematischer Schnittdarstellung eine weitere Ausführungsform der Reckstange einer Form- und Füllmaschine oder -station gemäß der Erfindung in unterschiedlichen Prozessphasen;
- Figur 13: in ähnlicher Darstellung wie Figuren 10 - 12 eine weitere modifizierte Ausführungsform der Reckstange der erfindungsgemäßen Form- und Füllmaschine oder -station.

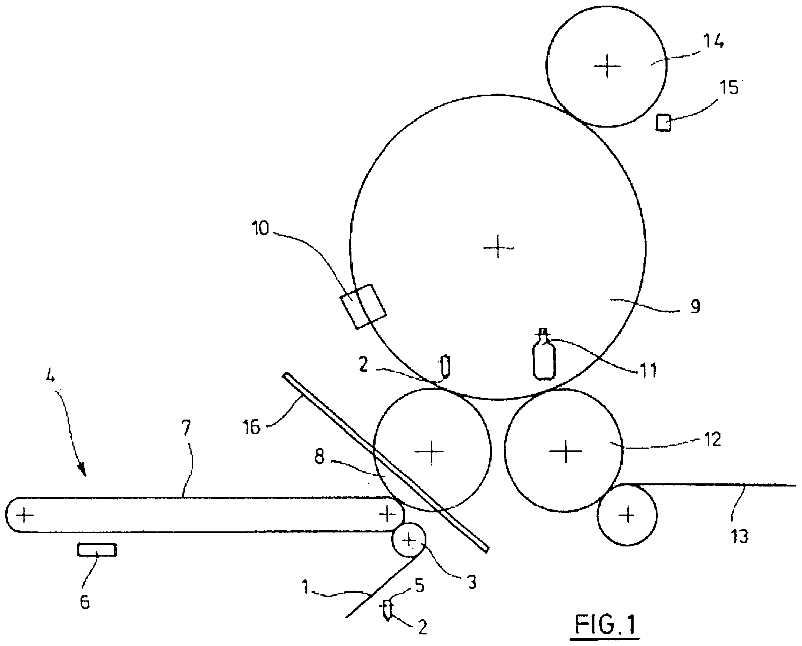

Der prinzipielle Aufbau einer kombinierten Form- und Füllvorrichtung oder -maschine ist in Figur 1 dargestellt. Von einer Zuführeinrichtung (1) werden schematisch dargestellte Vorformlinge (2), die auch als Preforms bezeichnet werden, unter Verwendung eines Übergaberades (3) von einer Heizeinrichtung (4) zugeführt. Im Bereich der Heizeinrichtung (4), in der die Vorformlinge (2) vorgeheizt bzw. thermisch konditioniert werden, können die Vorformlinge (2) anwendungsabhängig beispielsweise mit ihren Mündungsabschnitten (5) in lotrechter Richtung nach oben oder in lotrechter Richtung nach unten transportiert werden. Die Heizeinrichtung (4) ist beispielsweise mit Heizelementen (6) ausgestattet sein, die entlang einer Transporteinrichtung (7) angeordnet sind. Als Transporteinrichtung (7) kann beispielsweise eine umlaufende Kette verwendet werden. Als Heizelemente (6) eignen sich beispielsweise IR-Strahler oder Licht emittierende Dioden oder NIR-Strahler.

Nach einer ausreichenden Temperierung (auch thermische Konditionierung) werden die Vorformlinge (2) von einem Übergaberad (8) zu einem rotationsfähig angeordneten, d.h. um eine vertikale Maschinenachse umlaufend antreibbaren Rotor oder Prozessrad (9) bzw. an Form- und Füllstationen (10) übergeben, die an dem Rotor oder Prozessrad (9) vorgesehen sind. Das Prozessrad (9) ist mit einer Mehrzahl solcher Formstationen (19) ausgestattet, in deren Bereich sowohl eine Umformung der Vorformlinge (2) in die schematisch dargestellten Behälter (11) als auch eine Befüllung der Behälter (11) mit dem vorgesehenen Füllgut erfolgt. Das Formen jedes Behälters (11) erfolgt hierbei zeitgleich mit der Befüllung, wobei das Füllgut als Druckmedium beim Formen dient.

Nach dem Formen und Füllen werden die Behälter (11) von einem Entnahmerad (12) vom Prozessrad (9) wegtransportiert und einer Ausgabestrecke (13) zugeführt.

Gemäß der Ausführungsform in Figur 1 ist es vorgesehen, dem Prozessrad (9) über eine Eingabeeinrichtung (14) schematisch dargestellte Verschlusselemente (15) zuzuführen. Hierdurch ist es möglich, auf dem Prozessrad (9) auch bereits ein Verschließen der Behälter (11) durchzuführen und unter Verwendung der Entnahmeeinrichtung (12) fertig geformte, gefüllte und verschlossene Behälter (11) zu handhaben. Das Verschlusselement (15) kann beispielsweise als aufschraubbare Verschlusskappe, als Kronkorken oder als Siegelfolie ausgebildet sein.

Als Material für die Vorformlinge (1) können vorzugsweise unterschiedliche thermoplastische Materialien verwendet werden. Beispielhaft seien Polyethylenterephthalat (PET), Polyäthylen (PE), Polyäthylennaphthalat (PEN) oder Polypropylen (PP) genannt. Die Dimensionierung sowie das Gewicht der Vorformlinge (2) können an die Größe, das Gewicht und/oder an die Gestaltung der herzustellenden Behälter (11) angepasst werden.

Im Bereich der Heizeinrichtung (4) sind typischerweise eine Vielzahl von elektrischen und elektronischen Bauteilen angeordnet. Darüber hinaus sind die Heizelemente (6) mit feuchtigkeitsempfindlichen Reflektoren versehen. Da im Bereich des Prozessrades (9) unter Verwendung des flüssigen Füllgutes eine Befüllung und Formung der Behälter erfolgt, ist dafür zu sorgen, dass ein unbeabsichtigter Eintrag von Feuchtigkeit in den Bereich der Heizeinrichtung (4) vermieden wird. Dies kann beispielsweise durch eine Abschottung (16) erfolgen, die zumindest einen Spritzschutz bietet. Darüber hinaus ist es auch möglich, im Bereich des Übergaberades (8) verwendete Transportelemente für die Vorformlinge (2) geeignet zu temperieren oder mit Stößen von Druckgas derart zu beaufschlagen, dass anhaftende Feuchtigkeit nicht in den Bereich der Heizeinrichtung (4) gelangen kann.

Eine Handhabung der Vorformlinge (2) und/oder der Behälter (11) erfolgt vorzugsweise unter Verwendung von Zangen und/oder den Mündungsabschnitt (5) wenigstens bereichsweise von innen oder von außen beaufschlagenden Klemm- oder Steckelementen.

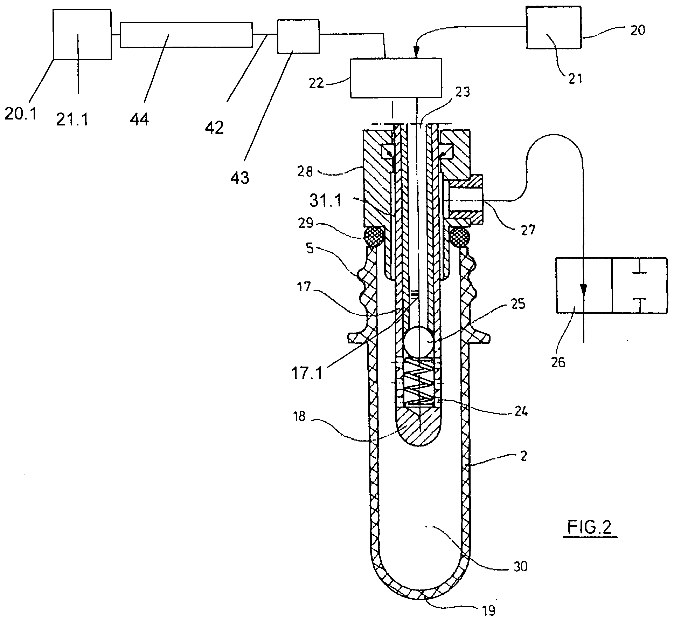

Figur 2 zeigt einen Längsschnitt durch einen Vorformling (2), in den ein Reckstab oder eine Reckstange (17) eingeführt ist. Die Reckstange (17) dient der mindestens zeitweisen Führung des Vorformlings (1) während seiner Umformung zum Behälter (11). Typischerweise erfolgt ein Kontakt zwischen einer Kuppe (18) der Reckstange (17) und einem Boden (19) des Vorformlings (2). Bei einem weiteren Einfahren der Reckstange (17) in den Vorformling (2) hinein wird eine Längsreckung des Vorformlings (2) verursacht. Nach einem Abschluss des Reckvorganges oder zumindest zeitweilig auch bereits während der Durchführung des Reckvorganges wird einer Vorratseinrichtung (20) entnommenes Füllgut (21) in den Vorformling (2) eingeleitet.

Eine Dosierung des Füllgutes (21) erfolgt unter Verwendung eines Mehrwegedosierventils (22). Beim dargestellten Ausführungsbeispiel ist die Reckstange (17) mindestens bereichsweise hohl bzw. mit einem Kanal ausgebildet. Im Bereich einer Wandung der Reckstange (17) sind Ausströmöffnungen (24) angeordnet, die von einem Rückschlagventil (25) gegenüber dem Mehrwegedosierventil (22) absperrbar sind. Hierdurch kann ein unbeabsichtigtes Heraustropfen von Füllgut (21) aus der Reckstange (17) vermieden bzw. minimiert werden.

Eine Entlüftung des Vorformlings (2) kann unter Verwendung eines Entlüftungventils (26) erfolgen. Das Entlüftungsventil (26) ist mit einer Ausströmöffnung (27) verbunden, die im Bereich eines den Vorformlings (1) beaufschlagenden Anschlusselementes (28) angeordnet ist. Durch das Anschlusselement (28) hindurch ist die Reckstange (17) positionierbar. Der Vorformling (2) wird gegenüber dem Anschlusselement (28) von einer Dichtung (29) abgedichtet, die beispielsweise als ein O-Ring ausgebildet sein kann. Ein Innenraum (30) des Vorformlings (2) kann über einen Ringspalt (31) mit der Ausströmöffnung (27) verbunden sein. Der Ringspalt (31) umschließt hierbei bereichsweise die Reckstange (17).

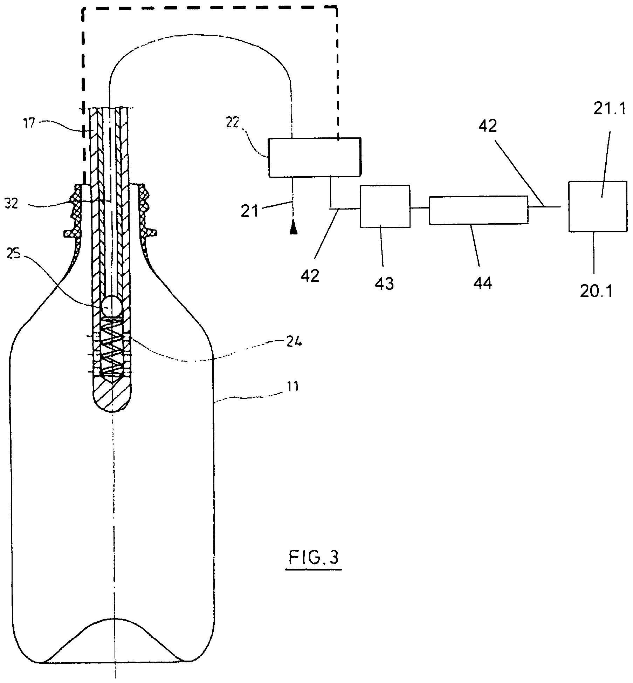

Figur 3 zeigt schematisch eine ähnliche Einrichtung wie in der Darstellung gemäß Figur 2 unter Verwendung einer hohlen Reckstange (17) mit einem eingebauten Rückschlagventil (25). Dargestellt ist allerdings ein bereits fertig geformter Behälter (11). Zu erkennen ist sowohl in Figur 2 als auch in Figur 3, dass vorzugsweise eine Mehrzahl von Ausströmöffnungen (24) im Bereich der Reckstange (17) angeordnet wird. Beim dargestellten Ausführungsbeispiel sind derartige Ausströmöffnungen (24) auf unterschiedlichen Höhenniveaus entlang einer Längsachse (32) der Reckstange (17) positioniert. Ebenfalls zeigt das dargestellte Ausführungsbeispiel eine Ausrichtung der Ausströmöffnungen (24) mit einer im Wesentlichen horizontalen Ausströmrichtung. Sowohl die Anordnung der Ausströmöffnungen (24) im Bereich der Reckstange (17) als auch die Ausrichtung der Ausströmöffnungen (24) ist aber variierbar. Angestrebt wird typischerweise ein möglichst ruhiges und spritzarmes Ausströmverhalten.

Bei den Ausführungsformen der Figuren 2 und 3 ist der Ringspalt (31) in zwei Teilringkanäle (31.1) und (31.2) unterteilt, von denen in der nachstehend noch näher beschriebenen Weise der eine Teilringkanal (31.1) als Rückgaskanal und der andere Teilringkanal (31.2) als Flüssigkeitskanal beim Formen und Füllen dienen. Selbstverständlich können der Rückgaskanal und der Flüssigkeitskanal im Anschlusselement (28) auch anders ausgebildet sein. Das Mehrwegedosierventil (22) ist mit einem Auslass mit dem Kanal oder Innenraum (23) der Reckstange (17) und mit einem anderen Auslass mit dem Flüssigkeitskanal oder Teilringkanal (31.2) verbunden. Das Entlüftungsventil ist mit dem Auslass (27) des Rückgaskanals oder Teilringkanals (31.1) verbunden.

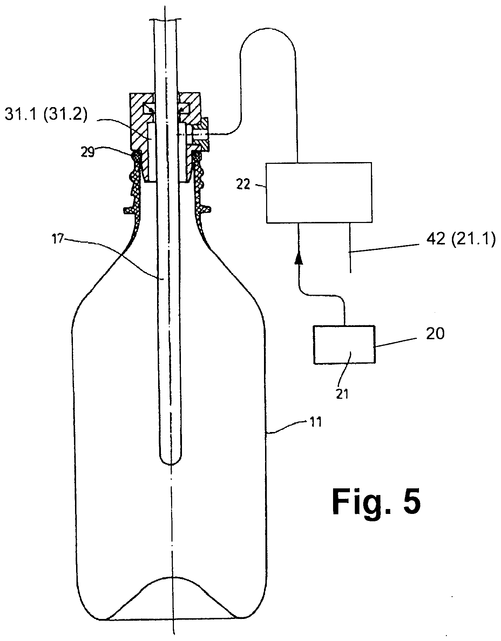

Gemäß der nicht erfindungsgemäßen Ausführungsform in Figur 5 wird eine massive Reckstange (17) verwendet. Eine Zuführung des Füllgutes (21) erfolgt entlang mindestens eines Strömungskanals an der Reckstange (17) vorbei. Vorzugsweise wird hierzu der Ringspalt (31) verwendet. Auch bei dieser Ausführungsform ist es möglich, ein gezieltes Entlüften durchzuführen.

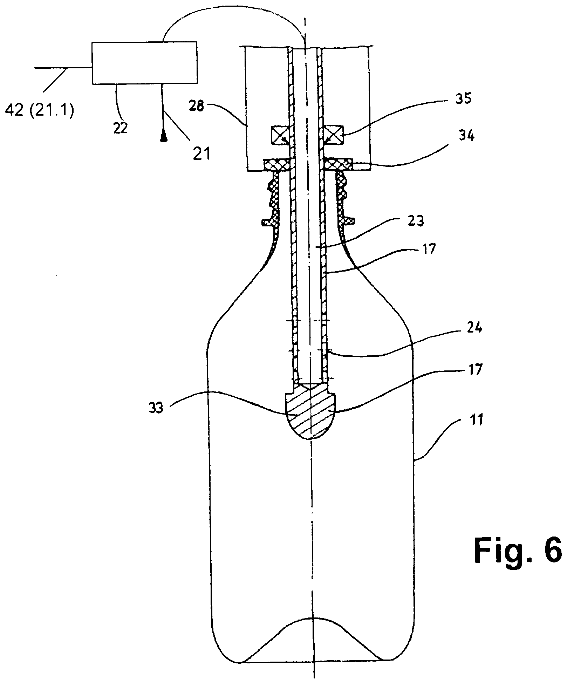

Figur 6 zeigt eine Ausführungsform, bei der die Reckstange (17) eine zur Verhinderung eines Nachtropfens optimierte Ausführungsform besitzt. Im Bereich der Kuppe (17) ist hierzu ein Dichtelement (33) angeordnet. Das Dichtelement (33) kann beispielsweise durch eine Durchmesservergrößerung der Reckstange (17) bereitgestellt werden.

Ebenfalls ist eine geeignete Materialauswahl denkbar. Beim Zurückziehen der Reckstange (17) aus dem Behälter (11) heraus gelangt das Dichtelement (33) in Kontakt mit einem Gegenelement (33), das im Bereich des Anschlusselementes (28) angeordnet ist. Das Gegenelement (34) ist vorzugsweise als eine Dichtung ausgeführt. Die Ausströmöffnungen (24) der Reckstange (17) sind nach einer entsprechenden Positionierung der Reckstange (17) abgedichtet vom Behälter (11) getrennt angeordnet, so dass ein Nachtropfen aus dem Innenraum (23) der Reckstange (17) heraus sicher vermieden werden kann. Im Bereich des Anschlusselementes (28) ist typischerweise mindestens ein Lager (35) zur Führung der Reckstange (17) angeordnet.

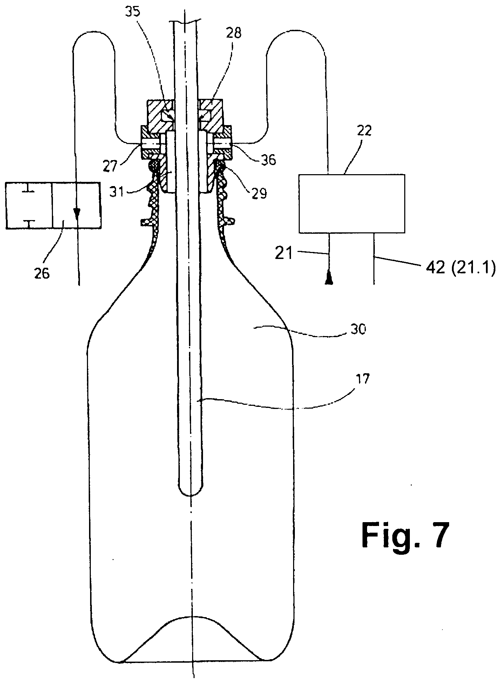

Figur 7 zeigt eine nicht erfindungsgemäße Ausführungsform, bei der wiederum eine massive Reckstange (17) verwendet wird. Durch an der Reckstange (17) vorbeilaufende Strömungskanäle, insbesondere durch den Ringspalt (31) hindurch, ist sowohl das Mehrwegedosierventil (22) für das Füllgut (21) als auch das Entlüftungsventil (26) mit dem Ringkanal (31) und über diesen bei Formen und Füllen mit dem Innenraum (30) des Vorformlings (2) bzw. des Behälters (11) verbunden. Beim dargestellten Ausführungsbeispiel ist die Ausströmöffnung (27) in einer radialen Richtung des Anschlusselementes (28) gegenüberliegend zu einer Zuführöffnung (36) angeordnet, die mit dem Mehrwegedosierventil (22) verbunden ist.

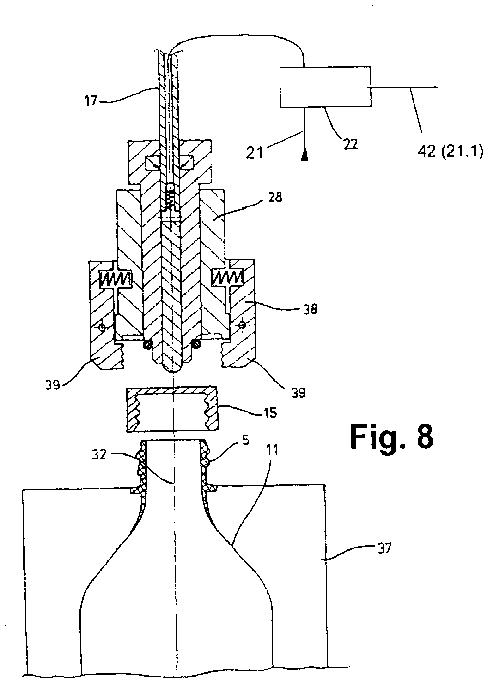

Figur 8 zeigt eine Ausführungsform, bei der im Bereich des Prozessrades (9) gemäß Figur 1 auch ein Verschließen der Behälter (11) erfolgt. Der Behälter (11) ist hierbei noch im Bereich einer Form (37) angeordnet, die einen Teil der Formstation (10) gemäß Figur 1 ausbildet. Eine Verschließeinrichtung (38) ist bei dieser Ausführungsform bezüglich der Längsachse (32) koaxial zum Anschlusselement (28) angeordnet. Die Verschließeinrichtung (38) besitzt beispielsweise verschwenkbar angeordnete Greifer (39), die zur Beaufschlagung des Verschlusselementes (15) vorgesehen sind. Insbesondere ist daran gedacht, die Verschließeinrichtung (38) drehbeweglich relativ zum Anschlusselement (28) anzuordnen. Hierdurch kann das Verschlusselement (15) mit einem Innengewinde auf ein Außengewindes des Mündungsabschnittes (5) aufgeschraubt werden.

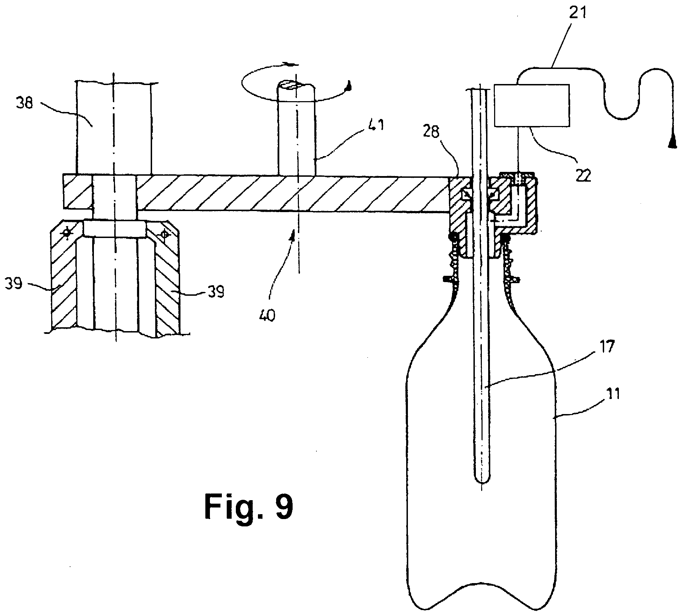

Figur 9 zeigt eine alternative Ausführungsform zur Konstruktion gemäß Figur 8. Die Verschließeinrichtung (38) und das Anschlusselement (28) sind hier nicht koaxial relativ zueinander angeordnet, sondern werden von einem Werkzeugträger (40) abwechselnd in einer Arbeitsanordnung bzw. einer Ruheanordnung positioniert. Der Werkzeugträger (40) kann beispielsweise revolverartig ausgebildet und mit einer Drehachse (41) versehen sein.

Bei den Ausführungsformen der Figuren 8 und 9 sind im Anschlusselement (28) jeweils zusätzlich zu dem Kanal oder Innenraum (23) der Reckstange (17) ein in diesen Figuren nicht dargestellter Flüssigkeitskanal, beispielsweise in Form des Teilringkanals (31.2), sowie bevorzugt auch ein Rückgaskanal, beispielsweise in Form des Teilringkanals (31.2), vorgesehen.

Nachfolgend werden einige Prozesstypische Parameter beispielhaft näher erläutert. Das Füllgut (21) wird dem Anschlusselement (28) vorzugsweise mit einer Temperatur des umgebenden Raumes, beispielsweise im Bereich von 20°C bis 30°C, zugeführt. Das Füllgut (21) kühlt hierdurch das Material des Behälters (1 1) und unterstützt eine schnelle Formstabilität des geformten Behälters (11). Hierdurch wird eine sehr kurze Zykluszeit unterstützt. Ebenfalls ist es aber möglich, das Füllgut (21) stärker gekühlt oder erwärmt zuzuführen.

Während der Formung des Behälters (11) kann das Füllgut (21) zumindest zeitweilig mit einem konstanten Volumenstrom in den Vorformling (2) bzw. den Behälter (11) eingeleitet werden. Es ist aber auch möglich, für den Volumenstrom ein geeignetes zeitliches Profil derart vorzugeben, dass zu unterschiedlichen Zeitpunkten unterschiedlich große Volumenströme generiert werden.

Vor einer Einleitung des Füllgutes (21) ist es möglich, innerhalb des Vorformlings (1) befindliche Luft abzusaugen und/oder durch ein Inertgas zu ersetzen. Dies empfiehlt sich insbesondere bei oxidationsempfindlichen Füllmedien (21).

Als Füllgut (21) können entweder reine Flüssigkeiten oder mit Zusätzen versehene Flüssigkeiten verwendet werden. Insbesondere ist an eine Zuführung von karbonisierten Füllmedien gedacht. Da das Füllgut (21) dem Vorformling (1) bzw. dem Behälter (2) unter Druck zugeführt wird, beispielsweise mit einem Druck von 10 bar, erweist es sich als zweckmäßig, sämtliche Strömungswege für das Füllgut (21) derart zu gestalten, dass lokale Dekompressionen durch die Strömungsvorgänge vermieden werden: Eine lokale oder zeitweilige Dekompression könnte ansonsten zu einem Ausgasen von Kohlendioxid führen.

Alternativ zu der in Figur 1 dargestellten Beheizung von vorzugsweise spritzgegossenen Vorformlingen (2) ist es auch möglich, die Vorformlinge (2) unmittelbar vor ihrer Umformung in die Behälter (11) herzustellen. Dies kann beispielsweise durch einen Spritzgussvorgang wie bei einem sogenannten einstufigen Spritz-Blas-Verfahren erfolgen, ebenfalls ist eine Kompressionsformung möglich. Eine derartige Formung der Vorformlinge (2) vermeidet die Verwendung von elektrischen und elektronischen Bauteilen im Bereich einer Heizeinrichtung oder reduziert zumindest wesentlich den Umfang einer Verwendung derartiger Teile, da diese dann nur noch für eine eventuell erforderliche Temperaturprofilierung benötigt werden.

Als Materialien für die Bauteile des Prozessrades (9) werden vorzugsweise korrosionsfeste Stoffe verwendet. Gedacht ist insbesondere an die Verwendung von nichtrostenden Stählen sowie Kunststoffen. Insbesondere ist daran gedacht, die Formen (37) ganz oder teilweise aus einem geeigneten Kunststoff auszubilden.

Zur Minimierung der erforderlichen Reckkräfte ist daran gedacht, den Reckvorgang durch eine Zufuhr des Füllgutes (21) zu unterstützen. Bei einer derartigen Unterstützung ist allerdings dafür zu sorgen, dass die Führung des Vorformlings (2) durch die Reckstange (17) sichergestellt ist. Dies kann beispielsweise dadurch erfolgen, dass die einwirkende Reckkraft gemessen wird und eine Steuerung des Volumenstromes des Füllgutes (21) derart erfolgt, dass immer eine Mindestreckkraft aufrecht erhalten bleibt. Die Größe der Reckkraft lässt sich insbesondere sehr einfach bei elektrisch angetriebenen Recksystemen durch die Messung des Antriebsstromes oder bei pneumatischen Recksystemen durch eine Druckmessung ermitteln.

Bei der Abfüllung von Behältern (11) mit dem Füllgut (21) ist es häufig erwünscht, nach einem Verschließen des Behälters (11) einen gasgefüllten Kopfraum bereitzustellen. Dieser freie Kopfraum kann durch die Volumenverminderung generiert werden, die aus dem Zurückziehen der Reckstange (17) resultiert.

Die oben bereits erläuterte Materialauswahl erfolgt insbesondere auch unter Berücksichtigung von gegebenen Hygieneanforderungen. Es wird hierbei eine Entkeimbarkeit bzw. Sterilisierbarkeit gewährleistet. Ebenfalls erfolgt ein konstruktiver Aufbau derart, dass die Anforderungen an eine gute Reinigbarkeit erfüllt sind.

Eines oder mehrere der Übergaberäder können mit Servoantrieben ausgestattet sein.

Hierdurch wird es insbesondere unterstützt, eine vollständige Trennung der Heizeinrichtung (4) vom Prozessrad (9) während der Durchführung von Reinigungsvorgängen zu realisieren. Ebenfalls ist daran gedacht, im Bereich mindestens eines der Übergaberäder zurückziehbare Handhabungselemente anzuordnen. Ein weiterer Feuchtigkeitsschutz kann durch die Verwendung eines Trockenlufttunnels erfolgen.

Nachfolgend wird beispielhaft ein konkreter Prozessablauf beschrieben. Vor oder nach dem Einsetzen des Vorformlings (2) in die Form (37) erfolgt zunächst ein Gasaustausch im Innenraum des Vorformlings, um insbesondere Sauerstoff zu verdrängen oder den Anteil von Sauerstoff zu vermindern. Ein Vorgang des Spülens und/oder Evakuierens dauert typischerweise höchstens 0,1 Sekunde. Das Recken des Vorformlings (2) unter Verwendung der Reckstange (17) dauert typischerweise etwa 0,2 Sekunden. Ebenfalls ist für das Füllen und die hieraus resultierende Umformung des Vorformlings (2) in den Behälter (11) ein Zeitraum von etwa 0,2 Sekunden vorgesehen. Für das anschließende Schaffen eines Kopfraumes wird typischerweise maximal ein Zeitraum von 0,2 Sekunden benötigt. Der Vorgang des Beruhigens und Entlastens des abgefüllten Behälters erfolgt bei stillen Getränken äußerst schnell, bei kohlensäurehaltigen Getränken kann dieser Vorgang einen Zeitraum bis zu 5 Sekunden in Anspruch nehmen.

Eine Behandlung des Kopfraumes kann anschließend beispielsweise unter Verwendung einer Hochdruckaufschäumung oder einer Zudosierung von Stickstoff erfolgen. Das anschließende Zuführen einer Verschlusskappe kann bei karbonisierten Getränken einen Zeitraum bis zu 1,5 Sekunden in Anspruch nehmen. Ebenfalls nimmt der Vorgang des Verschließens bzw. Aufschraubens beispielsweise einen Zeitraum von 1,5 Sekunden in Anspruch.

Nach dem fertigen Verschließen des Behälters (11) öffnet die Form (37) und der abgefüllte Behälter (11) wird entnommen und abtransportiert.

Während der Einleitung des Füllgutes in den umzuformenden Vorformling (2) bzw. den noch in der Formung befindlichen Behälter (11) ergibt sich in der Regel ein typischer Druckverlauf im Füllsystem bzw. im Vorformling (2) bzw. den noch in der Formung befindlichen Behälter (11). Aufgrund der Aufweitung des Behälters (11) liegt zunächst ein vergleichsweise geringer Druck vor, der zum Ende des Formungsvorgangs ansteigt. Der entsprechende Druckanstieg bzw. die Höhe des Druckanstieges im Füllsystem, insbesondere in der Füllleitung, kann als Steuergröße für einen folgenden Prozessschritt verwendet werden und gegebenenfalls den Zeitpunkt der Einleitung dieses nächsten Prozessschrittes bestimmen. Alternativ oder ergänzend ist auch daran gedacht, als Steuergrößen die Charakteristik des Druckverlaufes und/oder des Volumenstromes des Füllgutes zu verwenden.

Hinsichtlich der Temperatur des Füllgutes ist insbesondere daran gedacht, das Füllgut mit einer Umgebungstemperatur zuzuführen. In Abhängigkeit von den jeweiligen Anwendungsrandbedingungen ist aber gegenüber einer Befüllung mit Umgebungstemperatur auch eine Temperaturerhöhung oder eine Temperaturerniedrigung denkbar.

Gemäß einer weiteren Variante ist daran gedacht, den Füllvorgang zweistufig durchzuführen, wobei während der ersten Prozessstufe das Füllgut mit einer Temperatur zugeführt wird, die größer ist als die Temperatur während des zweiten Prozessschrittes. Der erste Prozessschritt kann beispielsweise durchgeführt werden, wenn über die Reckstange (11) die Längsreckung des Vorformlings (2) durchgeführt wird. Der zweite Prozessschritt schließt sich dann an die Durchführung des Reckvorganges an und entspricht der Queraufweitung des Behälters (11).

Bei der vorstehend bereits kurz erwähnten Beruhigung im Kopfraum nach der Druckentlastung ist auch daran gedacht, gegebenenfalls eine Absaugung von sich bildenden Gasen und/oder Schaum durchzuführen.

Hinsichtlich des Verschließens der fertig geformten und befüllten Behälter (11) sind ebenfalls unterschiedliche Varianten realisierbar. Bei einer Variante ist es möglich, einen Teil der Behandlungs- oder Form- und Füllstationen (10) auf dem Rotor oder Prozessrad (9) mit einem Revolverkopf zu versehen. Der Revolverkopf umfasst einerseits einen Blas- bzw. Form- und Füllkopf und andererseits einen Verschließkopf. Dies entspricht der schematischen Darstellung in Figur 9. Ebenfalls ist es aber denkbar, eine integrierte Konstruktion zu verwenden, bei der der jeweilige Kopf sowohl den Blas-, den Füll- und den Verschließvorgang durchführt.

Gemäß einer weiteren Variante sind zwar der Form- und Füllkopf und der Verschließkopf als separate Bauteile ausgebildet, jedoch verschwenkbar an jeder Form- und Füllstation (10) angeordnet. Gemäß einer dritten Variante ist lediglich der Form- und Füllkopf auf dem Rotor oder Prozessrad (9) angeordnet und es erfolgt eine Übergabe des noch offenen Behälters an eine separate Verschließvorrichtung, beispielsweise an ein Transportrad, das mit einem Verschließkopf ausgestattet ist.

Die Applikation der Verschlusselemente (15), beispielsweise der Verschlusskappen, kann beispielsweise unmittelbar nach der Öffnung der jeweiligen Form (37) und Erfassung des Behälters (1) durch ein Halte- und Greifelement erfolgen. Eine vorteilhafte Variante besteht darin, die Form (37) geschlossen zu halten und damit den Behälter (11) lagerichtig zu fixieren, wobei nur die Mündung für ein Verschließelement freigegeben wird. Diese Freigabe erfolgt indem entweder die Form (37) für eine Winkelstrecke auf eine radial unterschiedliche Position verfahren wird oder der Form- und Füllkopf verschwenkt und oder verfahren wird, so dass die Behältermündung für eine Verschließelement frei wird.

Hierdurch würde somit eine Aufgabe der Verschlusskappen auf dem Rotor oder Prozessrad (9) erfolgen. Insbesondere ist daran gedacht, vor einer Aufgabe der Verschlusselemente (15) den Mündungsraum des gefüllten Behälters (11) mit einem Inertgas zu beaufschlagen.

Vorstehend wurde der einfacheren Beschreibung wegen davon ausgegangen, dass nur eine Vorratseinrichtung (20) für das Füllgut (21) vorgesehen ist. Tatsächlich weist die Form- und Füllvorrichtung oder -maschine aber eine weitere Vorratseinrichtung (20.1) für einen weiteren Anteil oder eine weitere Komponente des Füllgutes auf, der bzw. die einen höheren C02-Gehalt aufweist als das Füllgut (21) und nachfolgend mit (21.1) bezeichnet ist.

Durch die erfindungsgemäße Ausbildung besteht die Möglichkeit das Füllgut (21) durch entsprechende Ansteuerung des Mehrwegedosierventils (22) auf wenigstens zwei unterschiedlichen Höhenniveaus in den jeweiligen Vorformling (2) einzubringen.

Durch die Verwendung von zwei Vorratseinrichtungen (20) und (20.1) besteht insbesondere die Möglichkeit, unterschiedliche Komponenten oder Anteile des Füllgutes (21) bzw. (21.1) durch entsprechende Ansteuerung des Mehrwegedosierventils (22) auf unterschiedlichem Höhenniveau in dem Vorformling (2) oder in den sich formenden Behälter (11) einzubringen. Das Einbringen des Füllgutes (21) bzw. (21.1) auf den unterschiedlichen Höhenniveaus erfolgt bei entsprechender Ausbildung und Ansteuerung des Mehrwegedosierventils (22) beispielsweise zeitgleich oder zeitlich überlappend oder aber zeitversetzt, und zwar im letzten Fall bevorzugt in der Weise, dass zunächst beispielsweise in der jeweiligen Form- und Füllphase das Füllgut in den Innenraum (30) des Vorformlings (2) und des sich bildenden Behälters (11) auf dem ersten höheren Höhenniveau eingebracht wird und erst dann zeitversetzt das Einbringen des Füllgutes auf dem zweiten, niedrigeren Höhenniveau erfolgt, und zwar bevorzugt erst dann, wenn die Auslassöffnung (24) von dem auf den höheren Niveau eingebrachten Füllgut, beispielsweise Füllgut (21) vollständig überdeckt ist.

Um Turbulenzen beim Einbringen des Füllgutes, beispielsweise des Füllgutes (21.1) über die Auslassöffnung (24) zu vermeiden, ist diese vorzugsweise innen und/oder außen mit abgerundeten Kanten und/oder trichter- oder kelchförmig ausgeführt, und zwar mit einem sich zur Außen- oder Mantelfläche der Reckstange (17) erweiternden Querschnitt.

Weiterhin ist die Auslassöffnung (24) bevorzugt so ausgebildet, dass ihre Achse und damit auch die Achse der Hauptströmungsrichtung des aus der Auslassöffnung 25 (24) austretenden Füllgutes (21) bzw. (21.1) gegenüber der Achse der Reckstange (17) geneigt ist, und zwar in einem Winkel kleiner 80°, bevorzugt in einem Winkel zwischen 60 und 75°, der sich nach unten, d.h. zu der der Ebene der Dichtung (29) abgewandten Seite hin öffnen.

Durch die Verwendung von zwei Vorratseinrichtungen (20) und (20.1) besteht weiterhin die Möglichkeit, das Füllgut (21) bzw. (21.1) mit unterschiedlicher Temperatur und/oder mit unterschiedlichem Druck und/oder mit unterschiedlicher Konzentration an Kohlendioxid bereit zu stellen und in den jeweiligen Vorformling (2) oder den sich bildenden Behälter (11) einzuleiten.

Weiterhin besteht auch die Möglichkeit, bei entsprechender Ansteuerung und Ausbildung des Mehrwegedosierventils (22) das Einleiten des Füllgutes (21) und/oder (21.1) auf dem ersten, höheren Höhenniveau und dem zweiten niedrigeren Höhenniveau zeitgleich vorzunehmen.

Als besonders vorteilhaft hat sich gezeigt, wenn bei den vorgenannten Verfahren eine Unterschichtung erreicht wird, und zwar insbesondere in Bezug auf das Einbringen des Anteils oder der Komponente des Füllgutes (21.1) mit C02-Gehalt oder mit dem höheren C02-Gehalt. Es hat sich nämlich als problematisch herausgestellt, im Falle einer voll- oder teilkarbonatisierung des Füllgutes die rapide Druckentlastung nach dem Ausformen und Füllen der Behälter (11) von dem hohen Form- und Fülldruck bis zum Verschließen des jeweiligen Behälters beispielsweise bei Umgebungsdruck ohne Produktverlust zu gestalten. Eine hierbei auftretende massive Schaumbildung mit Produktverlust hindert bisher den Einsatz dieser hydraulischen Ausformtechnik für C02-haltige Produkte.

Nach einer der Erfindung zugrunde liegenden Erkenntnis, ist es u.a. zur Vermeidung derartiger Produktverluste besonders vorteilhaft, wenn das Füllgut (21) bzw. (21.1) oder die Anteile des Füllgutes (21) bzw. (21.1) an zu mindestens zwei Zeitpunkten oder in zumindest zwei Prozessphasen mit unterschiedlichen C02-Gehalten und/oder mit unterschiedlichen Temperaturen zugeführt wird. Hierbei ist es zweckmäßig, in einer zweiten oder nachfolgenden Prozessphase das Füllgut oder die Füllgutkomponente (21.1) mit der höheren Konzentration an Kohlendioxid zuzuführen. Dies hat den Vorteil, dass zwar das Füllgut (21) und (21.1) im entstehenden Behälter (11) zusammengeführt das hydraulische Druckmedium zum Formen des Behälters (11) bilden, sich aber das in den sich bildenden Behälter (11) bereits eingebrachte Füllgut (21) beruhig hat oder im Wesentlichen beruhigt hat und beim Einbringen des Füllgutes (21.1) oder des Anteils an Füllgut (21.1) mit der höheren C02-Konzentration zuerst weitere Lösungsprozess im Flüssigkeitsvolumen ablaufen. Die zweite oder nachfolgende Prozessphase ist dabei beispielsweise eine die Form- und Füllphase abschließende Prozessphase. Das Einleiten des Füllgutes (21.1) oder des Anteils an Füllgut (21.1) mit der höheren C02-Konzentration in das bereits vorhandene Flüssigkeitsvolumen erfolgt bevorzugt unterschichtig, d.h. z.B. im Bereich des Bodens des sich bildenden Behälters (11). Das Einbringen der Füllgutkomponenten bzw. des Füllgutes (21) und (21.1) erfolgt gesteuert durch das Mehrwegedosierventil (22).

Eine Variante besteht darin, das Füllgut (21.1) oder den Anteil an Füllgut (21.1) mit der höheren Konzentration an Kohlendioxid vor dem Einleiten zu kühlen, und dann in der vorgenannten zweiten Prozessphase dieses Füllgut (21.1) oder den entsprechenden Anteil mit der höheren Konzentration an Kohlendioxid mit einer tieferen Temperatur als das Füllgut (21) oder der Anteil an Füllgut (21) der ersten Prozessphase in den sich bildenden Behälter (11) einzuleiten. Auch allein hierdurch stellt sich eine Unterschicht mit C02-reichem Füllgut ein, wodurch eine Schaumbildung, auch eine Schaumbildung beim Entlasten soweit zumindest verringert wird, dass nachteilige Produktverluste nicht auftreten.

Hierbei sollte nach Möglichkeit der Kohlendioxidgehalt in der zweiten Prozessphase 30 Gew.-% über dem Kohlendioxidgehalt in der ersten Prozessphase liegen, insbesondere 50 Gew.-% bis 100 Gew.-% über dem Kohlendioxidgehalt in der ersten Phase. Idealerweise werden in der ersten oder vorausgehenden Prozessphase eine stille, d.h. C02-freie Füllgutkomponente, d.h. das Füllgut (21) und in der zweiten Prozessphase eine C02-reiche Füllgutkomponente, d.h. das Füllgut (21.1) in den sich bildenden Behälter (11) eingeleitet.

Eine Variante besteht darin, dass die Temperatur des Füllgutes (21.1) oder des Anteils des Füllgutes (21) der zweiten Prozessphase gekühlt ist, beziehungsweise mindestens 10 °C unter der Temperatur der ersten oder einer vorausgegangenen Prozessphase liegt, insbesondere weniger als 10 °C beträgt und idealer Weise zwischen 4°C und 8°C liegt.

Es hat sich als vorteilhaft erwiesen, wenn der Druck des Füllgutes (21.1) oder des Anteils des Füllgutes (21.1), welches bzw. welcher die höhere Kohlendioxidkonzentration und/oder die tiefere Temperatur aufweist, mindestens während des Ausformungsprozesses bzw. während der Form- und Füllphase zeitweise höher ist als der Druck mindestens eines anderen Anteils oder des restlichen Anteils des Füllgutes (21), und zwar bevorzugt um mindestens 1 bar.

Weiterhin sollte der Druck auf einer Leitungsstrecke (42) oder einem Teil der Leitungsstrecke, über die das Füllgut (21.1) oder der Anteil des Füllgutes (21.1) mit der höheren Kohlendioxidkonzentration und/oder mit der tieferen Temperatur zugeführt wird, höher als der Druck des restlichen Füllgutes (21) oder des restlichen Anteils des Füllgutes (21) sein, und zwar während des Ausformungsprozesses zumindest zeitweise um 2 bar bis 5 bar höher.

Eine Ausführung sieht vor, dass auf dem Strömungsweg des innerhalb des Reckstabes (17) fließenden Füllgutes (21) und (21.1) eine Drosselelement oder Querschnittsverengung vorgesehen ist, wobei das Drosselelement in Strömungsrichtung des Füllgutes (21) und (21.1) beispielsweise kurz vor mindestens einem Auslass (24) der des Reckstange (7) angeordnet ist. Somit wird der vorteilhafte hohe Druck bis kurz vor der ersten Entspannung beibehalten. Dies kann noch gesteigert werden, wenn ein Teil des Füllgutes (11) an der Reckstange (17) vorbei und ein Teil des Füllgutes (1) durch die Reckstange hindurch zugeführt wird. Dabei sollte zweckmäßiger Weise das stärker kohlendioxidhaltige Füllgut (21.1) durch die Reckstange (17) hindurch zugeführt werden. Vorteilhaft ist auch, wenn die Reckstange (17) mindestens bereichsweise relativ zum Füllgut (21) und (21.1) thermisch isoliert wird.

Die Form- und Füllvorrichtung bzw. -maschine umfasst somit zur Herstellung von gefüllten Behältern (11) aus einem thermoplastischen Material u.a. die mindestens eine entlang eines Transportweges eines Vorformlings (2) angeordnete Heizstrecke oder Heizvorrichtung (4) und wenigstens eine mit einer Form versehene Form- und Füllstation (10).

Weiterhin umfasst die Form- und Füllvorrichtung bzw. -maschine u.a. eine Zuführeinrichtung (1) für das in den Behälter (11) abzufüllendes Füllgut (21) und (21.1) sowie eine Karbonatisierungseinheit (43), die beispielsweise in der Leitungsstrecke (42) vorgesehen ist und mit der mindestens in dem Teilstrom des Füllgutes (21.1) Kohlendioxid gelöst werden kann, wobei die Form- und Füllstation (10) eine den Vorformling (2) während seiner Umformung in den Behälter (11) mindestens zeitweilig beaufschlagende Führungseinrichtung in Form einer Reckstange (17) aufweist und durch den Kanal oder Innenraum (23) der Reckstange (17) mindestens ein Teil des Füllgutes (21) leitbar ist. Am unteren Ende der Reckstange (17) ist wenigstens eine Auslassöffnung (24) des Kanals oder Innenraumes (23) vorgesehen sind.

Vorteilhafterweise ist eine Kühlungseinheit (44) zumindest entlang der Leitungsstrecke (42) für das Füllgut (21.1) vorgesehen, in welchem stromabwärts Kohlendioxid gelöst wird oder welches von der Karbonatisierungseinheit (43) zuströmt.

Hierbei sollte mindestens der Leitungsabschnitt (42), in dem das kohlendioxidreiche Füllgut (21.1) oder ein Anteil hiervon geführt wird, zumindest auf einer Teillänge thermisch isoliert, beispielsweise mit einer Isolierung aus Teflon oder aus einem teflonhaltigem Material, und/oder thermisch isoliert ausgekleidet sein, beispielsweise mit Teflon oder einem teflonhaltigem Material.

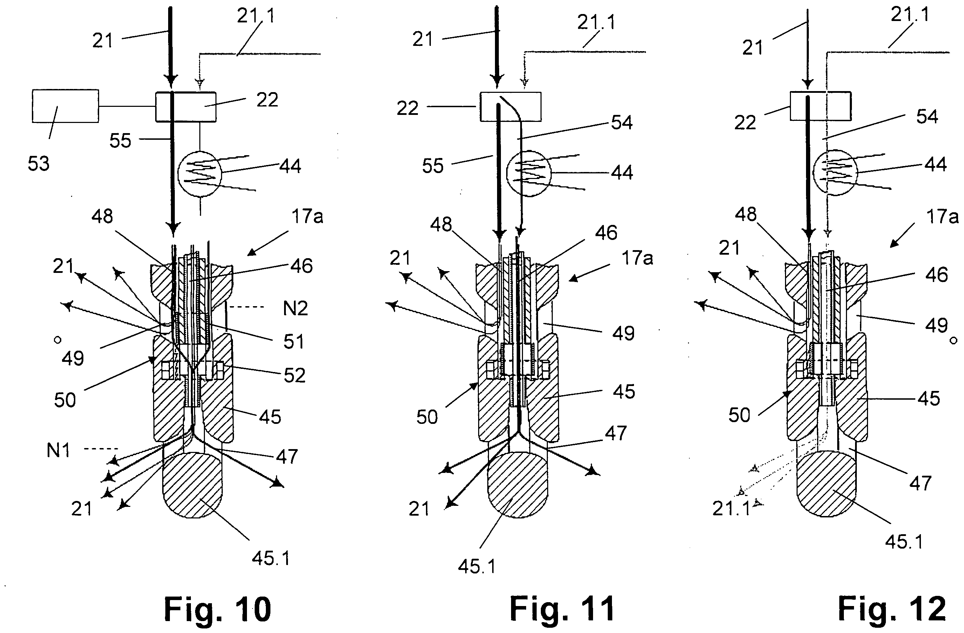

Die Figuren 10-12 zeigen in einer Teildarstellung und im Schnitt eine Reckstange 17a, die von ihrer grundsätzlichen Funktion her der Reckstange 17 entspricht, d.h. beim Formen und Füllen des jeweiligen Behälters (11) zur Führung und zur Steuerung insbesondere der axialen Streckung des jeweiligen Vorformlings (2) bzw. des sich formenden Behälters (11) dient. Die Reckstange (17a) besteht im Wesentlichen aus einem stabförmigen Reckstangenkörper (45) mit abgerundeten freien Reckstangenende (45.1). In dem Reckstangenkörper (45) sind mehrere Kanäle ausgebildet, und zwar ein innerer, achsgleich mit der Längsachse der Reckstange (17a) angeordneter Kanal (46), der in der Nähe des Endes (45.1) an mehreren um die Achse der Reckstange (17a) verteilten Auslassöffnungen (47) auf dem unteren Niveau N1 mündet, sowie eine den inneren Kanal (46) umschließender und von diesem inneren Kanal getrennter äußerer ringförmiger Kanal (48), der an mehreren um die Achse der Reckstange (17a) verteilten oberen Auslassöffnungen (49) an der Umfangs- bzw. Mantelfläche der Reckstange (17a) auf dem oberen Niveau N2 mündet. Im Inneren der Reckstange (17a) ist weiterhin ein in der Figur 10 allgemein mit (50) bezeichnetes Steuerventil vorgesehen, mit welchem gesteuert eine Verbindung zwischen dem inneren Kanal (46) und dem äußeren Kanal (48) hergestellt bzw. unterbrochen werden kann. Das Steuerventil (50) ist bei der dargestellten Ausführungsform im Wesentlichen von einem axial bewegbaren Verschlussring (51) gebildet, der beispielsweise durch eine nicht näher dargestellte Feder in seine in der Figur 10 angehobene und die Verbindung zwischen den Kanälen (46) und (48) freigebende Stellung vorgespannt ist. Durch eine Betätigungseinrichtung, beispielsweise durch eine in der Reckstange (17a) untergebrachte Magnetspule (52) ist der Verschlussring (51) gegen die Wirkung der Feder in seine untere, die Verbindung zwischen den Kanälen (46) und (48) unterbrechende Stellung bewegbar.

Dargestellt ist in den Figuren 10- 12 weiterhin das von einer elektronischen Steuereinheit (53) gesteuerte Mehrwegedosierventil (22), welches wiederum als Mehrwegeventil ausgeführt ist, welches mit einem ersten Anschluss oder Eingang mit der in der Figur 10 nicht dargestellten Vorratseinrichtung (20) für das Füllgut (21 und mit einem zweiten Anschluss mit der in der Figur 10 ebenfalls nicht dargestellten Vorratseinrichtung (20.1) für das Füllgut (21.1)) in Verbindung steht. Die Ausgänge des Mehrwegedosierventils (22) sind über eine Flüssigkeitsverbindung (54) mit dem inneren Kanal (46) bzw. über eine Flüssigkeitsverbindung (55) mit dem äußeren ringförmigen Kanal (48) verbunden. In der Flüssigkeitsverbindung (54) ist die Kühleinheit (44) angeordnet. Über die Steuereinheit (53) wird auch das Steuerventil (50) bzw. dessen Magnetspule (52) gesteuert, wobei das Steuerventil (50) in der dargestellten Variante als elektromagnetisch, linear angetriebenes System ausgeführt ist. Dies hat den besonderen Vorteil, dass die Verschluss- und Öffnungsgeschwindigkeiten stufenlos geregelt werden können. Es ist dabei nicht erforderlich, dass das Steuerventil (50) zu 100 % dichtend ausgelegt ist, eine geringe Leckagemenge kann toleriert werden.

Mit der Reckstange (17a) sind verschiedene Arbeitsweisen möglich, uns zwar beispielsweise das zeitgleiche Einbringen des Füllgutes, z.B. des Füllgutes (21) ohne C02-Gehalt oder mit reduziertem C02-Gehalt auf dem unteren Höhenniveau (N1) über die Auslassöffnungen (47) und auf dem höheren Höhenniveau (N2) über die Auslassöffnungen (49) in den Vorformling 2 bzw. in den sich formenden Behälter (11). Hierfür ist das Steuerventil (50) durch entsprechende Ansteuerung von der Steuereinheit (53) für eine Verbindung der beiden Kanäle (46) und (48) geöffnet und weiterhin das Mehrwegedosierventil (22) durch die Steuereinheit (53) derart angesteuert, dass über dieses Dosierventil lediglich eine Verbindung zu der Flüssigkeitsverbindung (55) besteht. Dieser Betriebszustand ist in der Figur 10 dargestellt.

Bei geschlossenem Steuerventil (50) ist es weiterhin möglich, durch entsprechende Ansteuerung des Mehrwegedosierventils (22) über dieses Ventil für das Füllgut (21) eine Verbindung zu beiden Kanälen (46) und (48) herzustellen, sodass das Füllgut (21) wiederum entsprechend den Pfeilen über die Auslassöffnungen (47) und (49) auf den unterschiedlichen Höhenniveaus N1 und N2 in den Vorformling (2) bzw. in den sich formenden Behälter (11) eingebracht wird. In diesem in der Figur 11 dargestellten Betriebszustand besteht weiterhin die Möglichkeit, die dem inneren Kanal (46) zugeführte und aus den unteren Austrittsöffnungen (47) austretende Teilmenge des Füllgutes (21) in der Kühleinheit (44) zu kühlen, oder aber die Flüssigkeitsverbindung (54) für einen zeitlich folgenden Verfahrensschritt mit dem Füllgut zu kühlen.

Weiterhin besteht die Möglichkeit, durch entsprechende Ansteuerung des Mehrwegedosierventils (22) das Füllgut (21.1) über die Flüssigkeitsverbindung (54) im inneren Kanal (46) für den Austritt ausschließlich an den unteren Auslassöffnungen (47) bzw. auf dem Höhenniveau N1 und das Füllgut (21) für den Austritt ausschließlich an den oberen Auslassöffnungen (49) bzw. auf dem höheren Höhenniveau N2 auszubringen, wobei das Ausbringen des Füllgutes (21) und (21.1) entweder zeitgleich, zeitversetzt oder zeitlich überlappend erfolgt, und zwar bei einem zeitversetzten oder zeitlich überlappenden Ausbringen bevorzugt in der Form, dass zunächst über die oberen Auslassöffnungen (47) das Füllgut (21) und dann über die unteren Auslassöffnungen (49) das Füllgut (21.1) ausgebildet ausgebracht werden. Dieser Betriebszustand, bei dem wiederum ein Kühlen des Füllgutes (21.1) in der Kühleinheit (44) erfolgt, ist in der Figur 12 dargestellt. Selbstverständlich können die verschiedenen, in den Figuren 10 - 12 dargestellten Betriebszustände in der jeweiligen Form- und Füllphase beliebig kombiniert werden.

So ist es beispielsweise möglich, während der jeweiligen Form- und Füllphase in einer ersten Teilphase entsprechend der Figur 10 das Füllgut (21) über die Auslassöffnungen (47) und (49) einzubringen, in einer zeitlich folgenden zweiten Teilphase entsprechend der Figur 11 weiterhin das Füllgut (21) über die Auslassöffnungen (47) und (49) einzubringen und dabei zugleich die Flüssigkeitsverbindung (54) mit dem die Kühleinheit (44) durchströmenden Füllgut (21) vorzukühlen und dann entsprechend der Figur 12 in einer dritten Teilphase über die unteren Auslassöffnungen (47) das Füllgut (21.1) einzubringen, wobei beispielsweise über die oberen Auslassöffnungen (49) weiterhin das Füllgut (21) ausgebracht wird.

In jedem der Fälle bildet sich zwischen den Höhenniveaus N1 und N2 eine beruhigte Zwischenzone aus, die die Füllgutanteile voneinander abgrenzt. Einen vorteilhaften Einfluss hat dabei das vorgenannte elektromagnetisch angetriebene Steuerventil (50), weil es ein impulsarmes und damit vermischungsarmes Umschalten ermöglicht. Ein weiterer Vorteil besteht bei diesem elektromagnetisch angetriebenen Steuerventil (50) darin, dass es sehr robust ist und zu Reinigungszwecken bei entsprechenden Reinigungszyklen, durch schnelles ggf. mehrfaches Schalten sehr leicht gereinigt werden kann.

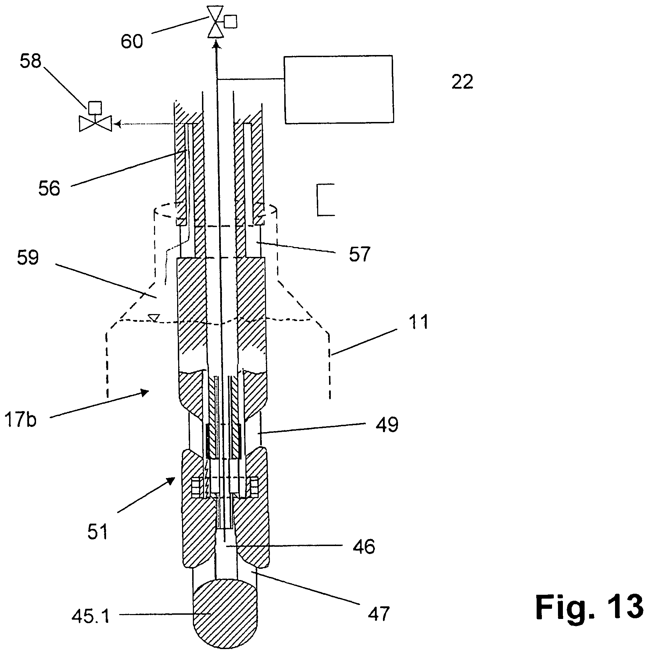

Die Figur 13 zeigt in vereinfachter Schnittdarstellung als weitere Ausführungsform eine Reckstange (17b), die sich von der Reckstange (17a) im Wesentlichen nur dadurch unterscheidet, dass zusätzlich zu den beiden Kanälen (46) und (48) in einem oberen, dem Reckstangenende (45.1) weiter entfernt liegenden Bereich ein dritter ringförmiger Kanal (56) vorgesehen ist, der an mehreren um die Achse der Reckstange (17b) verteilten Auslass- oder Entlastungsöffnungen (57) an der Umfangs- oder Mantelfläche der Reckstange (17b) mündet. Über den Kanal (56) erfolgt beispielsweise gesteuert durch ein von der Steuereinheit (53) angesteuertes Steuerventil (58) nach dem Formen und Füllen des jeweiligen Behälters (11) das Entlasten des in dem Behälter (11) über dem Füllgutspiegel gebildeten Kopfraumes (59). Über die Auslassöffnungen (47) und bei geöffnetem Steuerventil (50) auch über die Auslassöffnungen (49) ist beispielsweise gesteuert durch ein z.B. von der Steuereinheit (53) angesteuertes Steuerventil (60) eine weitere Entlastung des Behälters (11) nach dem Formen und Füllen möglich.

Die in den Figuren 10 - 13 dargestellten Reckstangen (17a) bzw. (17b) bzw. die diese Reckstangen aufweisenden Form- und Füllvorrichtungen oder -maschinen ermöglichen es auch, vor Einleitung der eigentlichen Form- und Füllphase jeweiligen Vorformling (2) zu evakuieren und/oder mit einem beispielsweise auch heißen Inert-Gas zu Spülen, und zwar bevorzugt über die unteren Auslassöffnungen (47).

Wie die Figuren 10 - 13 zeigen, sind die Auslassöffnungen (47) und (49) bzw. die Reckstange (17a) an ihrer Umfangs- oder Mantelfläche so ausgebildet, dass die Hauptstrahlrichtung des aus den Auslassöffnungen (47) bzw. (49) austretenden Mediums gegenüber der Längsachse der Reckstange (17a) in einem Winkel kleiner als 90° geneigt ist, und zwar an den unteren Auslassöffnungen (47) derart, dass dieser Winkel sich zu dem unteren Reckstangenende (45.1) öffnet und an den oberen Auslassöffnungen (49) derart, dass sich dieser Winkel zu der dem unteren Reckstangenende (45.1) abgewandten Ende der Reckstange (17a) öffnet.

Vorstehend wurde davon ausgegangen, dass der jeweilige Vorformling (2) während des Formens und Füllens mit seiner offenen Seite nach oben weisend in Dichtlage gegen die Dichtung (29) anliegt. Es sind aber auch Ausführungen der Form- und Füllstation (10) möglich, bei denen der jeweilige Vorformling (2) während des Formens und Füllens mit seiner offenen Seite nach unten weisend in Dichtlage gegen die Dichtung (29) oder eine entsprechende Dichtung des Anschlusselementes (28) anliegt. In diesem Fall bilden dann der Ringspalt (31) oder der Teilringkanal (31.2) oder ein anderer im Anschlusselement (28) vorgesehener Flüssigkeitskanal den Füllgutauslass für das niedrige Höhenniveau und die wenigstens eine Auslassöffnung (24) den Füllgutauslass für das höhere Höhenniveau.

Die Auslassöffnungen (47) bzw. (49) weisen insbesondere abgerundete Kanten bzw. Radien auf, so dass lokale Turbulenzen und Kavitation vermieden wird und eine stabile Schichtung erfolgt. Vorteilhafterweise werden die abgerundeten Kanten der Auslassöffnungen (47) und (49) bei der Reckstange sowohl radial innen als auch radial außen vorgesehen.

### Bezugszeichenliste

- 1: Zuführvorrichtung
- 2: Vorformling
- 3: Übergaberad
- 4: Heizeinrichtung
- 5: Mündungsabschnitt
- 6: Heizelement
- 7: Transporteinrichtung
- 8: Übergaberad
- 9: Prozessrad
- 10: Form- und Füllstation
- 11: Behälter
- 12: Entnahmerad
- 13: Ausgabestrecke
- 14: Eingabeeinrichtung
- 15: Verschlusselement
- 16: Form - Abschottung
- 17, 17a, 17b: Reckstab oder Reckstange
- 17.1: Verengung
- 18: Kuppe der Reckstange
- 19: Boden des Vorformlings
- 20, 20.1: Vorratseinrichtung
- 21, 21.1: Füllgut
- 22: Dosierventil
- 23: Innenraum der Reckstange
- 24: Auslassöffnung
- 25: Rückschlagventil
- 26: Entlüftungsventil
- 27: Auslassöffnung
- 28: Anschlusselement
- 29: Dichtung
- 30: Innenraum des Vorformlings
- 31: Ringspalt
- 31.1, 31.2: Teilring-Kanalabschnitt
- 32: Längsachse der Flasche bzw. Reckstange
- 33: Dichtelement
- 34: Gegenelement
- 35: Lager
- 36: Zuführöffnung
- 37: Form
- 38: Verschließeinrichtung
- 39: Greifer
- 40: Werkzeugträger
- 41: Drehachse
- 42: Leitung oder Leitungsstrecke
- 43: Karbonatisierungseinheit
- 44: Kühlungseinheit
- 45: Reckstangenkörper
- 45.1: Reckstangenende
- 46: Kanal
- 47: Auslassöffnung
- 48: Kanal
- 49: Auslassöffnung
- 50: Steuerventil
- 51: Verschlussring
- 52: Mangetspule
- 53: Steuerelektronik
- 54, 55: Flüssigkeitsverbindungen
- 56: Kanal
- 57: Auslassöffnung
- 58: Steuerventil
- 59: Kopfraum
- 60: Steuerventil

## Patentansprüche

1. Verfahren zum Herstellen von mit einem flüssigen Füllgut (21 , 21.1) gefüllten Behältern (11) aus Vorformlingen (2) aus einem thermoplastischen Material, wobei der jeweilige Vorformling (2) thermisch konditioniert und anschließend während einer Form- und Füllphase in einer Form (37) mit dem Füllgut (21 , 21.1) als Druckmedium in den Behälter (11) umgeformt wird, wobei der Vorformling während der Umformung in den Behälter (11) mindestens zeitweilig durch eine Reckstange (17, 17a, 17b) geführt und in Achsrichtung gestreckt wird
und das Füllgut (21, 21.1) oder mindestens ein Teilvolumen des Füllgutes (21, 21.1) auf wenigstens zwei unterschiedlichen Höhenniveaus (N1, N2) in den Vorformling (2) oder in den sich aus diesem bildenden Behälter (11) oder in den ausgeformten Behälter (11) eingeleitet wird, **dadurch gekennzeichnet, dass** das Füllgut (21, 21.1) über wenigstens zwei auf den unterschiedlichen Höhenniveaus (N1, N2) angeordnete Auslassöffnungen (47, 49) der Reckstange (17a, 17b) ausgebracht wird, wobei in der Reckstange (17a, 17b) wenigstens zwei Kanäle (46, 48) vorgesehen sind, von denen ein erster Kanal (46) an wenigstens einer Auslassöffnung (47) auf dem niedrigen Höhenniveau (N1) mündet und ein zweiter Kanal (48) an wenigstens einer Auslassöffnung (49) auf dem höheren Höhenniveau (N2) mündet.

2. Verfahren nach Anspruch 1, **dadurch gekennzeichnet, dass** wenigstens eine Komponente (21) des Füllgutes an der Reckstange (17) vorbei und wenigstens zwei weitere Komponenten (21.1) durch die Reckstange (17) hindurch zugeführt werden.

3. Verfahren nach Anspruch 1 oder 2, **dadurch gekennzeichnet, dass** das Füllgut (21, 21.1) aus wenigstens zwei Anteilen oder Komponenten mit unterschiedlicher Konzentration an Kohlendioxid besteht.

4. Verfahren nach einem der vorhergehenden Ansprüche, **dadurch gekennzeichnet, dass** auf den mindestens zwei unterschiedlichen Höhenniveaus (N1, N2) das Füllgut (21, 21.1) oder Anteile oder Komponenten hiervon mit unterschiedlicher Konzentration an Kohlendioxid zugeführt werden, vorzugsweise der Anteil des Füllgutes (21.1), welcher im Vergleich zu wenigstens einem weiteren Anteil des Füllgutes (21) eine höhere Konzentration an Kohlendioxid enthält, auf dem tieferen Höhenniveau.

5. Verfahren nach Anspruch 3 oder 4, **dadurch gekennzeichnet, dass** das Füllgut (21, 21.1) oder Anteile oder Komponenten hiervon mit der höheren Konzentration an Kohlendioxid gekühlt zugeführt wird, vorzugsweise mit einer Temperatur kleiner als die Temperatur desjenigen Anteils an Füllgut (21), welches kein Kohlendioxid oder eine geringere Konzentration an Kohlendioxid aufweist.

6. Verfahren nach einem der Ansprüche 3 bis 5 **dadurch gekennzeichnet, dass** zumindest der Anteil des Füllgutes (21.1) mit der höheren Konzentration an Kohlendioxid durch die Reckstange (17, 17a, 17b) hindurch zugeführt wird.

7. Verfahren nach einem der vorhergehenden Ansprüche, **dadurch gekennzeichnet, dass** das Einleiten des Füllgutes (21, 21.1) auf den wenigstens zwei unterschiedlichen Höhenniveaus (N1, N2) zeitversetzt oder zeitgleich oder zeitlich überlappend erfolgt.

8. Verfahren nach einem der vorhergehenden Ansprüche, **dadurch gekennzeichnet, dass** das Einleiten des Füllgut (21, 21.1) oder der Anteile des Füllgutes (21, 21.1) auf den wenigstens zwei Höhenniveaus (N1 , N2) mit unterschiedlichen Drücken erfolgt.

9. Verfahren nach einem der Ansprüche 3 bis 8, **dadurch gekennzeichnet, dass** die Reckstange (17, 17a, 17b) zumindest bereichsweise gegenüber dem Füllgut (21, 21.1) thermisch isoliert wird, und zwar vorzugsweise in einem Bereich, in welchem das Füllgut (21, 21.1) oder der Anteil des Füllgutes (21, 21.1) zugeführt wird, das oder der die höhere Konzentration an Kohlendioxid und/oder die niedrigere Füllguttemperatur aufweist.

10. Verfahren nach einem der vorhergehenden Ansprüche, **dadurch gekennzeichnet, dass** zumindest ein Teilstrom des Füllgutes (21, 21.1) turbulenzarm in den Innenraum (30) des Vorformlings (2) oder des sich formenden Behälters (11) eingeleitet wird.

11. Verfahren nach einem der Ansprüche 3 bis 10, **dadurch gekennzeichnet, dass** das Füllgut (21.1) oder der Anteil des Füllgutes (21.1) mit der höheren Konzentration an Kohlendioxid erst dann auf dem tieferen Höhenniveau (N1) eingeleitet wird, wenn das in den Vorformling (2) oder in den sich bildenden Behälter (11) bereits eingebrachte Füllgut (21) einen Füllguteinlass (24, 47), der zum Einbringen des Füllgutes (21.1) mit der höheren Konzentration an Kohlendioxid bestimmt ist, zumindest vollständig oder im Wesentlichen vollständig überdeckt.

12. Verfahren nach einem der vorhergehenden Ansprüche, **dadurch gekennzeichnet, dass** das Füllgut (21, 21.1) derart ausgebracht wird, dass die Hauptstrahlrichtung des Füllgutes an den Auslassöffnungen (47, 49) mit einer Längsachse der Reckstange (17a, 17b) jeweils einen Winkel kleiner 90° einschließt, beispielsweise derart, dass dieser Winkel auf einem Höhenniveau (N1) sich zu einem freien Reckstangenende (45.1) und auf einem anderen Höhenniveau (N2) zu einer diesem freien Reckstangenende (45.1) abgewandten Seite hin öffnet.

13. Verfahren nach Anspruch 12, **dadurch gekennzeichnet, dass** auf den mindestens zwei unterschiedlichen Höhenniveaus (N1, N2) das Füllgut (21, 21.1) oder Anteile oder Komponenten hiervon mit unterschiedlicher Konzentration an Kohlendioxid in den Vorformling (2) oder in den sich aus diesem bildenden Behälter (11) oder in den ausgeformten Behälter (11) eingeleitet werden, und dass das Einleiten des Füllgutes oder des Anteils des Füllgutes (21.1) mit der höheren Konzentration an Kohlendioxid über wenigstens eine auf dem tieferen Höhenniveau (N1) befindliche Auslassöffnung (47) sowie das Einleiten des Füllgutes (21) oder des Anteils des Füllgutes (21) ohne Kohlendioxid oder mit der niedrigeren Konzentration an Kohlendioxid über wenigstens eine Auslassöffnung (49) auf dem höheren Höhenniveau (N2) oder über die Auslassöffnungen (47, 49) auf dem tieferen und höheren Höhenniveaus (N1, N2) erfolgt.

14. Vorrichtung zum Herstellen von mit einem flüssigen Füllgut (21 , 21.1) gefüllten Behältern (11) aus Vorformlingen (2) aus einem thermoplastischen Material, mit einer Heizstrecke (4) zum Vorheizen der Vorformlinge (2), mit wenigstens einer eine Form (37) aufweisenden Form- und Füllstation (10), mit wenigstens einer Vorratseinrichtung (20, 20.1) zur Breitstellung des Füllgutes (21 , 21.1), wobei vorzugsweise eine Karbonisierungseinheit (43) zum Einbringen oder Lösen von Kohlendioxid zumindest in einem Teilstrom des Füllgutes (21 , 21.1) vorgesehen ist, wobei die wenigstens eine Form- und Füllstation (10) eine füllrohrartig wirkende, in den jeweiligen Vorformling (2) oder in den jeweiligen sich formenden Behälter (11) beim Formen und Füllen zumindest zeitweise hineinreichende und den Vorformling (2) während seiner Umformung in den Behälter (11) zumindest zeitweilig beaufschlagende Reckstange (17, 17a, 17b) aufweist, **dadurch gekennzeichnet, dass** die Reckstange (17, 17a, 17b) im Inneren wenigstens zwei Kanäle (46, 48) zum Einleiten des Füllgutes (21, 21.1) in den Vorformling (2) oder in den sich formenden Behälter (11) oder in den ausgeformten Behälter (11) aufweist, von denen ein erster Kanal (46) an wenigstens einer Auslassöffnung (47) auf dem niedrigen Höhenniveau (N1) mündet und ein zweiter Kanal (48) an wenigstens einer Auslassöffnung (49) auf dem höheren Höhenniveau (N2) mündet.

15. Vorrichtung nach Anspruch 14, **dadurch gekennzeichnet, dass** eine Kühleinrichtung (44) entlang einer Leitung (54) oder entlang eines Leitungsabschnitts für dasjenige Füllgut (21.1) vorgesehen ist, in welchem stromabwärts, d.h. nach dem Kühlen und Durchströmen der Leitung (42) oder des Leitungsabschnittes Kohlendioxid gelöst wird oder welches der Leitung (42) oder dem Leitungsabschnitt von einer Karbonisierungseinheit (43) zuströmt.

16. Vorrichtung nach Anspruch 14 oder 15, **dadurch gekennzeichnet, dass** der wenigstens eine erste und/oder zweite Füllgutauslass (24, 47; 31 , 31.2, 49) von wenigstens einer Auslassöffnung (24, 47, 49) gebildet ist, die mit abgerundeten Kanten, vorzugsweise an beiden Seiten mit abgerundeten Kanten ausgebildet und/oder trichter- oder kelchförmig ausgeformt ist.

17. Vorrichtung nach einem der Ansprüche 14 bis 16, **dadurch gekennzeichnet, dass** die Achse der Hauptströmungsrichtung des wenigstens einen ersten und/oder des wenigstens einen zweiten Füllgutauslasses oder der diesen Auslass bildenden wenigstens einen Öffnung (24, 45, 47) gegenüber einer senkrecht zur Ebene der Anlage (28) orientierten Achse oder gegenüber einer Längsachse der Reckstange (17, 17a, 17b) in einem Winkel kleiner 90°, beispielsweise in einem Winkel kleiner 80°, vorzugsweise in einem Winkel von 60 - 75° geneigt ist, wobei sich der Winkel der Hauptströmungsrichtung des zweien Füllgutauslasses (31, 31.2, 49) vorzugsweise zu der einer Anlage (29) für ein offenes Ende des jeweiligen Vorformlings (2) zugewandten Seite und/oder der Winkel der Hauptströmungsrichtung des ersten Füllgutauslasses (24, 47) vorzugsweise zu der dieser Anlage (29) abgewandten Seite hin öffnet.

18. Vorrichtung nach einem der Ansprüche 14 bis 17, **dadurch gekennzeichnet, dass** in der Reckstange (17a, 17b) wenigstens ein Steuerventil (50), vorzugsweise wenigstens ein elektrisch steuerbares Steuerventil (50) zur Steuerung von in der Reckstange (17a, 17b) ausgebildeten Flüssigkeitswegen oder -kanälen (46, 48) für das Füllgut (21, 21.1).

19. Vorrichtung nach Anspruch 18, **dadurch gekennzeichnet, dass** über das wenigstens eine Steuerventil (50) der wenigstens eine erste und der wenigstens eine zweite Kanal (46, 48) gesteuert verbindbar und voneinander trennbar sind, wobei das wenigstens eine Steuerventil (50) z.B. wenigstens ein in einer Längsachse der Reckstange (17a, 17b) bewegbares Ventilelement, beispielsweise in Form eines Verschlussringes (51) aufweist.

20. Vorrichtung nach einem der Ansprüche 14 bis 19, **dadurch gekennzeichnet, dass** in der Reckstange (17b) wenigstens ein dritter Kanal (56) ausgebildet ist, der an wenigstens einer Auslassöffnung (47) mündet, die von der wenigstens einen Auslassöffnung (49) auf dem höheren Höhenniveau (N2) in Richtung der Längsachse der Reckstange (17b) derart beabstandet ist, dass sie sich auf einem Höhenniveau oberhalb des höheren Höhenniveaus (N2) und bei ausgeformten Behälter (11) innerhalb eines von dem Füllgut nicht eingenommenen Kopfraumes (59) des Behälters (11) befindet, wobei die wenigstens eine Auslassöffnung (57) über den Kanal (56) vorzugsweise mit einer beispielsweise ein Steuerventil (58) und/oder eine Drossel aufweisenden Entlastungsstrecke für das Entlasten des Kopfraumes (59) nach Abschluss der Form -und Füllphase verbunden ist.

21. Vorrichtung nach einem der Ansprüche 14 bis 20, **dadurch gekennzeichnet, dass** der wenigstens eine erste Kanal (46) über wenigstens ein Steuerventil (22, 60) gesteuert mit einem Entlastungskanal und/oder mit einer Vakuumquelle und/oder mit einer Inert-Gas-Quelle verbunden ist.

## Claims

1. A method for producing containers (11) filled with a liquid product (21, 21.1) from preforms (2) made of thermoplastic material, wherein the respective preform (2) is thermally conditioned and, during a moulding and filling phase, subsequently moulded in a mould (37) to form the container (11) with the product (21, 21.1) being used as pressure medium, wherein the preform, while being moulded to form the container (11), is at least temporarily passed through a stretch forming bar (17, 17a, 17b) and stretched in axial direction and the product (21, 21.1) or at least a partial volume of the product (21, 21.1) is introduced into the preform (2) or into the container (11) forming therefrom or into the completely moulded container (11) at least at two different levels (N1, N2), **characterised in that** the product (21, 21.1) is discharged through at least two outlet openings (47, 49) of the stretch forming bar (17a, 17b), said outlet openings (47, 49) being arranged at the two different levels (N1, N2), wherein at least two channels (46, 48) are provided in the stretch forming bar (17a, 17b), a first channel (46) of which ends at at least one outlet opening (47) at the lower level (N1) and a second channel (48) ends at at least one outlet opening (49) at the higher level (N2).

2. The method in accordance with Claim 1, **characterised in that** at least one component (21) of the product is supplied past the stretch forming bar (17) and at least two further components (21.1) are supplied through the stretch forming bar (17).

3. The method in accordance with Claim 1 or 2, **characterised in that** the product (21, 21.1) consists of at least two portions or components having a different concentration of carbon dioxide.

4. The method in accordance with any one of the preceding claims, **characterised in that**, at the at least two different levels (N1, N2), the product (21, 21.1) or portions or components thereof are supplied with a different concentration of carbon dioxide, preferably such that the portion of the product (21.1) that has a higher concentration of carbon dioxide as compared with at least one other portion of the product (21) is supplied at the lower level.

5. The method in accordance with Claim 3 or 4, **characterised in that** the product (21, 21.1) or portions or components thereof having the higher concentration of carbon dioxide are supplied cooled, preferably at a temperature that is lower than the temperature of the portion of the product (21) that has no carbon dioxide or a lower concentration of carbon dioxide.

6. The method in accordance with any one of Claims 3 to 5, **characterised in that** at least the portion of the product (21.1) having the higher concentration of carbon dioxide is supplied through the stretch forming bar (17, 17a, 17b).

7. The method in accordance with any one of the preceding claims, **characterised in that** the product (21, 21.1) at the at least two different levels (N1, N2) is introduced in a time-delayed manner or at the same time or overlapping in time.

8. The method in accordance with any one of the preceding claims, **characterised in that** the product (21, 21.1) or portions of the product (21, 21.1) at the at least two levels (N1, N2) is/are introduced at different pressures.

9. The method in accordance with any one of Claims 3 to 8, **characterised in that** the stretch forming bar (17, 17a, 17b) is thermally insulated against the product (21, 21.1) at least in certain regions, preferably in a region in which the product (21, 21.1) or the portion of the product (21, 21.1) that has the higher concentration of carbon dioxide and/or the lower product temperature is supplied.

10. The method in accordance with any one of the preceding claims, **characterised in that** at least a partial flow of the product (21, 21.1) is introduced into the interior region (30) of the preform (2) or the forming container (11) with a low amount of turbulences.

11. The method in accordance with any one of Claims 3 to 10, **characterised in that** the product (21.1) or the portion of the product (21.1) having the higher concentration of carbon dioxide is not introduced at the lower level (N1) before the product (21) that has already been introduced into the preform (2) or into the forming container (11) covers at least completely or in a substantially complete manner a product inlet (24, 47) intended to introduce the product (21.1) having the higher concentration of carbon dioxide.

12. The method in accordance with any one of the preceding claims, **characterised in that** the product (21, 21.1) is discharged in such a manner that the main jet direction of the product at the outlet openings (47, 49) each encloses an angle with a longitudinal axis of the stretch forming bar (17, 17b) that is smaller than 90°, for example in such a manner that this angle opens toward a free end (45.1) of the stretch forming bar at one level (N1) and toward a side facing away from this free end (45.1) of the stretch forming bar at another level (N2).

13. The method in accordance with Claim 12, **characterised in that**, at the at least two different levels (N1, N2), the product (21, 21.1) or portions or components thereof having a different concentration of carbon dioxide is/are introduced into the preform (2) or into the container (11) forming therefrom or into the completely moulded container (11), and that the product or the portion of the product (21.1) having the higher concentration of carbon dioxide is introduced through at least one outlet opening (47) disposed at the lower level (N1) and the product (21) or the portion of the product (21) having no carbon dioxide or having the lower concentration of carbon dioxide is introduced through at least one outlet opening (49) at the higher level (N2) or through the outlet openings (47, 49) at the lower and higher levels (N1, N2).

14. A device for producing containers (11) filled with a liquid product (21, 21.1) from preforms (2) made of thermoplastic material, comprising a heating section (4) for preheating the preforms (2), comprising at least one moulding and filling station (10) having a mould (37), comprising at least one storage device (20, 20.1) for providing the product (21, 21.1), wherein preferably a carbonation unit (43) is provided for introducing or dissolving carbon dioxide at least in a partial flow of the product (21, 21.1), wherein the at least one moulding and filling station (10) has a stretch forming bar (17, 17a, 17b) that works as a filling pipe, said stretch forming bar (17, 17a, 17b) extending into the respective preform (2) or into the respectively forming container (11) at least temporarily during the moulding and filling operation and pressurising the preform (2) while it is being moulded to form the container (11) at least temporarily, **characterised in that** the stretch forming bar (17, 17a, 17b) has in its interior region at least two channels (46, 48) for introducing the product (21, 21.1) into the preform (2) or into the forming container (11) or into the completely moulded container (11), a first channel (46) of which ends at at least one outlet opening (47) at the lower level (N1) and a second channel (48) ends at at least one outlet opening (49) at the higher level (N2).

15. The device in accordance with Claim 14, **characterised in that** a cooling device (44) is provided along a line (54) or along a line section for the product (21.1) in which carbon dioxide is dissolved downstream, i.e., after the product has been cooled or flown through the line (42) or the line section or which product flows from a carbonation unit (43) to the line (42) or the line section.

16. The device in accordance with Claim 14 or 15, **characterised in that** the at least one first and/or second product outlet (24, 47; 31, 31.2, 49) is formed by at least one outlet opening (24, 47, 49) which is formed with rounded edges, preferably with rounded edges on either side, and/or in a funnel- or cup-like shape.

17. The device in accordance with any one of Claims 14 to 16, **characterised in that** the axis of the main flow direction of the at least one first and/or the at least one second product outlet or the at least one opening (24, 45, 47) forming this outlet is inclined in relation to an axis aligned perpendicular to the plane of the system (28) or in relation to a longitudinal axis of the stretch forming bar (17, 17a, 17b) at an angle of less than 90°, for example, at an angle of less than 80°, preferably at an angle of 60° to 75°, wherein the angle of the main flow direction of the second product outlet (31, 31.2, 49) preferably opens to the side facing a system (29) for an open end of the respective preform (2) and/or the angle of the main flow direction of the first product outlet (24, 47) preferably opens to the side facing away from this system (29).

18. The device in accordance with any one of Claims 14 to 17, **characterised in that** at least one control valve (50), preferably at least one electrically controllable control valve (50) for controlling fluid paths or fluid channels (46, 48) for the product (21, 21.1) that are formed in the stretch forming bar (17a, 17b), is provided in the stretch forming bar (17a, 17b).

19. The device in accordance with Claim 18, **characterised in that** the at least one control valve (50) can be used to connect the at least one first and the at least one second channel (46, 48) to each other or disconnect them from each other in a controlled manner, wherein the at least one control valve (50), for example, has at least one valve element that can be moved along a longitudinal axis of the stretch forming bar (17a, 17b), said valve element, for example, having the form of a locking ring (51).

20. The device in accordance with any one of Claims 14 to 19, **characterised in that** at least one third channel (56) is formed in the stretch forming bar (17b), said channel (56) ending at at least one outlet opening (47) which is spaced apart from the at least one outlet opening (49) at the higher level (N2) in the direction of the longitudinal axis of the stretch forming bar (17b) in such a manner that said outlet opening (47) is disposed at a level above the higher level (N2) and, with the container (11) being moulded completely, is disposed inside a head space (59) of the container (11) that is not occupied by the product, wherein the at least one outlet opening (57) is connected via the channel (56), preferably to a relieving section for relieving the head space (59) after the moulding and filling phase has been completed, said relieving section, for example, having a control valve (58) and/or a throttle valve.

21. The device in accordance with any one of Claims 14 to 20, **characterised in that** the at least one first channel (46) is connected to a relieving channel and/or to a vacuum source and/or to an inert gas source, controlled via a control valve (22, 60).

## Revendications

1. Procédé de fabrication, à partir de préformes (2) en un matériau thermoplastique, de récipients (11) remplis d'un produit liquide (21, 21.1), chaque préforme (2) étant respectivement thermiquement conditionnée, après quoi elle est transformée en un récipient (11) dans un moule (37) pendant une phase de moulage et de remplissage au cours de laquelle le produit de remplissage (21, 21.1) fait office d'agent de pression, la préforme étant, pendant la transformation en récipient (11), temporairement au moins guidée et étirée en sens axial par une barre d'étirage (17, 17a, 17b), et le produit de remplissage (21, 21.1) ou une partie au moins du volume de produit de remplissage (21, 21.1) étant introduit à au moins deux différents niveaux de hauteur (N1, N2) dans la préforme (2) ou dans le récipient (11) en cours de formation à partir de la préforme ou dans le récipient (11) entièrement formé, **caractérisé en ce que** le produit de remplissage (21, 21.1) est introduit par au moins deux orifices de sorties (47, 49) de la barre d'étirage (17a, 17b) agencés à deux niveaux de hauteur (N1, N2) différents, deux canaux (46, 48) au moins étant prévus dans la barre d'étirage (17a, 17b), un premier canal (46) débouchant sur au moins un orifice de sortie (47) au niveau de hauteur inférieur (N1) et un second canal (48) débouchant sur au moins un orifice de sortie (49) au niveau de hauteur supérieur (N2).

2. Procédé selon la revendication 1, **caractérisé en ce qu'**un constituant (21) au moins du produit de remplissage est introduit à côté de la barre d'étirage (17) et deux autres constituants (21.1) au moins sont introduits à travers la barre d'étirage (17).

3. Procédé selon la revendication 1 ou 2, **caractérisé en ce que** le produit de remplissage (21, 21.1) est composé d'au moins deux parts ou constituants ayant des concentrations en dioxyde de carbone différentes.

4. Procédé selon l'une des revendications précédentes, **caractérisé en ce que** le produit de remplissage (21, 21.1) ou des parts ou constituants de ce produit ayant des concentrations en dioxyde de carbone différentes sont introduits à au moins deux niveaux de hauteur différents (N1, N2), la part (21.1) de produit de remplissage contenant une concentration en dioxyde de carbone supérieure à celle d'au moins une autre part (21) du produit de remplissage étant de préférence introduite au niveau de hauteur le plus bas.

5. Procédé selon la revendication 3 ou 4, **caractérisé en ce que** le produit de remplissage (21, 21.1) ou des parts ou constituants de ce produit dont la concentration en dioxyde de carbone est la plus élevée sont introduits sous forme refroidie, de préférence à une température inférieure à la température de la part de produit de remplissage (21) qui ne contient pas de dioxyde de carbone ou en contient une concentration moindre.

6. Procédé selon l'une des revendications 3 à 5, **caractérisé en ce qu'**au moins la part de produit de remplissage (21.1) dont la concentration en dioxyde de carbone est la plus élevée est introduite à travers la barre d'étirage (17, 17a, 17b).

7. Procédé selon l'une des revendications précédentes, **caractérisé en ce que** l'introduction du produit de remplissage (21, 21.1) aux deux ou plus de deux niveaux de hauteur différents (N1, N2) a lieu avec un décalage temporaire ou simultanément ou pendant des intervalles de temps qui se chevauchent.

8. Procédé selon l'une des revendications précédentes, **caractérisé en ce que** l'introduction du produit de remplissage (21, 21.1) ou de parts de produit de remplissage (21, 21.1) aux deux ou plus de deux niveaux de hauteur différents (N1, N2) a lieu à des pressions différentes.

9. Procédé selon l'une des revendications 3 à 8, **caractérisé en ce que** la barre d'étirage (17, 17a, 17b) est, en partie au moins, thermiquement isolée par rapport au produit de remplissage (21, 21.1), de préférence dans une zone dans laquelle est introduit le produit ou la part de produit remplissage (21, 21.1) avec la concentration en dioxyde de carbone la plus élevée et/ou la température de produit de remplissage la plus basse.

10. Procédé selon l'une des revendications précédentes, **caractérisé en ce qu'**au moins un flux partiel de produit de remplissage (21, 21.1) est introduit avec une faible turbulence dans l'espace intérieur (30) de la préforme (2) ou du récipient (11) en cours de formation.

11. Procédé selon l'une des revendications 3 à 10, **caractérisé en ce que** le produit de remplissage (21.1) ou la part de produit de remplissage (21.1) dont la concentration en dioxyde de carbone est la plus élevée n'est introduit au niveau de hauteur (N1) inférieur que lorsque le produit de remplissage (21) déjà introduit dans la préforme (2) ou dans le récipient (11) en cours de formation recouvre déjà au moins entièrement ou quasi entièrement un orifice d'introduction (24, 47) de produit de remplissage destiné à l'introduction du produit de remplissage (21.1) dont la concentration en dioxyde de carbone est la plus élevée.

12. Procédé selon l'une des revendications précédentes, **caractérisé en ce que** le produit de remplissage (21, 21.1) est introduit de façon à ce que la direction principale du jet de produit de remplissage aux orifices de sortie (47, 49) forme respectivement avec un axe longitudinal de la barre d'étirage (17a, 17b) un angle inférieur à 90°, par exemple de façon à ce que cet angle s'ouvre, à un niveau de hauteur (N1), vers une extrémité de barre d'étirage libre (45.1) et, à un autre niveau de hauteur (N2), vers un côté opposé à cette extrémité de barre d'étirage libre (45.1).

13. Procédé selon la revendication 12, **caractérisé en ce que** le produit de remplissage (21, 21.1) ou des parts ou constituants de ce produit ayant des concentrations en dioxyde de carbone différentes sont introduits aux au moins deux niveaux de hauteur différents (N1, N2) dans la préforme (2) ou dans le récipient (11) en cours de formation à partir de la préforme ou dans le récipient (11) entièrement formé, et **en ce que** l'introduction du produit de remplissage ou de la part de produit de remplissage (21.1) dont la concentration en dioxyde de carbone est la plus élevée se fait par au moins un orifice de sortie (47) situé au niveau de hauteur (N1) inférieur et que l'introduction du produit de remplissage (21) ou de la part de produit de remplissage (21) sans dioxyde de carbone ou avec la concentration en dioxyde de carbone est la plus faible se fait par au moins un orifice de sortie (49) situé au niveau de hauteur (N2) supérieur ou par les orifices de sortie (47, 49) respectivement situés aux niveaux de hauteur (N1, N2) inférieur et supérieur.

14. Dispositif de fabrication, à partir de préformes (2) en un matériau thermoplastique, de récipients (11) remplis d'un produit liquide (21, 21.1), avec une section de chauffage (4) pour le préchauffage des préformes (2), avec au moins une station de moulage et de remplissage (10) présentant un moule (37), avec au moins un dispositif de stockage (20, 20.1) pour la mise à disposition du produit de remplissage (21 , 21.1), une unité de carbonation (43) étant de préférence prévue pour l'introduction ou la dissolution de dioxyde de carbone dans au moins un flux partiel de produit de remplissage (21 , 21.1), la ou les stations de moulage et de remplissage (10) présentant une barre d'étirage (17, 17a, 17b) faisant fonction de tuyau de remplissage pénétrant, temporairement au moins pendant le moulage et le remplissage, dans chaque préforme (2) ou dans chaque récipient (11) en cours de formation et agissant temporairement au moins sur la préforme (2) pendant sa transformation en récipient (11), **caractérisé en ce que** la barre d'étirage (17, 17a, 17b) présente dans son intérieur au moins deux canaux (46, 48) pour l'introduction du produit de remplissage (21, 21.1) dans la préforme (2) ou dans le récipient (11) en cours de formation ou dans le récipient (11) entièrement formé, un premier canal (46) débouchant sur au moins un orifice de sortie (47) au niveau de hauteur inférieur (N1) et un second canal (48) débouchant sur au moins un orifice de sortie (49) au niveau de hauteur supérieur (N2).

15. Dispositif selon la revendication 14, **caractérisé en ce qu'**un dispositif de refroidissement (44) est prévu le long d'un conduit (54) ou le long d'un section de conduit pour ce produit de remplissage (21.1) dans lequel du dioxyde de carbone est dissout en aval, c'est-à-dire après le refroidissement et le passage à travers le conduit (42) ou la section de conduit, ou lequel afflue dans le conduit (42) ou la section de conduit en provenance d'une unité de carbonation (43).

16. Dispositif selon la revendication 14 ou 15, **caractérisé en ce que** la(s) première(s) et/ou seconde(s) sortie(s) de produit de remplissage (24, 47; 31 , 31.2, 49) est(sont) formée(s) par au moins un orifice de sortie (24, 47, 49) dont les bords sont arrondis, de préférence des deux côtés, et/ou en forme d'entonnoir ou de coupe.

17. Dispositif selon l'une des revendications 14 à 16, **caractérisé en ce que** l'axe du sens d'écoulement principal de la (des) première(s) et/ou de la (des) seconde(s) sortie(s) de produit de remplissage ou de l'orifice ou des orifices (24, 45, 47) formant la sortie en question est incliné par rapport à un axe perpendiculaire au plan de l'appui (28) ou un axe longitudinal de la barre d'étirage (17, 17a, 17b) d'un angle inférieur à 90°, par exemple d'un angle inférieur à 80°, de préférence d'un angle de 60 - 75°, l'angle du sens d'écoulement principal de la seconde sortie (31, 31.2, 49) de produit de remplissage s'ouvrant de préférence vers le côté faisant face à un appui (29) pour un embout ouvert de la préforme (2) respective et/ou l'angle du sens d'écoulement principal de la première sortie (24, 47) de produit de remplissage s'ouvrant de préférence vers le côté opposé à cette butée (29).

18. Dispositif selon l'une des revendications 14 à 17, **caractérisé en ce qu'**au moins une vanne-pilote (50) est prévue dans la barre d'étirage (17a, 17b), à savoir de préférence au moins une vanne-pilote (50) à commande électrique pour la commande des voies ou canaux d'écoulement (46, 48) de liquides aménagés dans la barre d'étirage (17a, 17b) pour le produit de remplissage (21, 21.1).

19. Dispositif selon la revendication 18, **caractérisé en ce que** le(s) premier(s) canal (canaux) et le(s) second(s) canal (canaux) (46, 48) peuvent être raccordés ou séparés par commande de la (des) vanne(s)-pilote(s) (50), la (les) vanne(s)-pilote(s) (50) présentant par ex. au moins un élément de vanne pouvant se déplacer selon un axe longitudinal de la barre d'étirage (17a, 17b), par exemple sous forme d'une bague de verrouillage (51).

20. Dispositif selon l'une des revendications 14 à 19, **caractérisé en ce que** dans la barre d'étirage (17b) est formé au moins un troisième canal (56) débouchant sur au moins un orifice de sortie (47) qui, dans le sens de l'axe longitudinal de la barre d'étirage (17b), est distant de l'orifice ou des orifices (49) situé(s) au niveau de hauteur supérieur (N2) d'un écart tel qu'il se trouve à un niveau de hauteur plus élevé que le niveaux de hauteur supérieur (N2) et, lorsque le récipient (11) est entièrement formé, à l'intérieur d'un espace de tête (59) du récipient (11) non occupé par le produit de remplissage le (les) orifice(s) de sortie (57) étant relié(s) par le canal (56) de préférence à une section de décharge pour la décharge de l'espace de tête (59) après achèvement de la phase de moulage et de remplissage, cette section présentant par exemple une vanne-pilote (58) et/ou un étranglement.

21. Dispositif selon l'une des revendications 14 à 20, **caractérisé en ce que** le (les) premier(s) canal (canaux) (46) est (sont) relié(s) de façon contrôlée par l'intermédiaire d'au moins une vanne-pilote (22, 60) à un canal de décharge et/ou à une source de vide et/ou à une source de gaz inerte.
